# EUROPÄISCHE PATENTSCHRIFT

(11) **EP 3 538 620 B1**
(45) Veröffentlichungstag und Bekanntmachung des Hinweises auf die Patenterteilung: **28.10.2020**
(21) Anmeldenummer: 17808351.5
(22) Anmeldetag: 09.11.2017
(51) Int. Cl.: C09J 183/04

(54) **VERNETZBARE SILIKONMISCHUNGEN ENTHALTEND EINEN GUANIDINKATALYSATOR UND EINEN HAFTVERMITTLER**
CROSSLINKABLE SILICONE COMPOSITIONS CONTAINING A GUANIDINE CATALYST AND AN ADHESION PROMOTER
MÉLANGES DE SILICONE RÉTICULABLES COMPRENANT UN CATALYSEUR GUANIDINE ET UN AGENT D'ACCROCHAGE

(30) Priorität: 11.11.2016 EP 16198479
(43) Veröffentlichungstag der Anmeldung: 18.09.2019
(73) Patentinhaber: Sika Technology AG, 6340 Baar (CH)
(72) Erfinder: JAKOB, Samuel, 8953 Dietikon (CH); FRIEDEL, Manuel, 8048 Zürich (CH)
(74) Vertreter: Sika Patent Attorneys
(86) Internationale Anmeldenummer: PCT/EP2017/078802
(87) Internationale Veröffentlichungsnummer: WO 2018/087250

(56) Entgegenhaltungen:
- WO-A1-2015/026687
- DE-T2- 69 207 858
- US-A1- 2006 199 901

## Beschreibung

### Technisches Gebiet

Die vorliegende Erfindung betrifft das Gebiet der zweikomponentigen Silikonzusammensetzungen, wie sie insbesondere als Kleb- und Dichtstoffe eingesetzt werden.

### Stand der Technik

Kondensationsvernetzende Silikone sind lange bekannt. Diese können ein- oder zweikomponentig formuliert werden. Während es bei der Formulierung von einkomponentigen Silikonen (RTV-1) möglich ist, Titanatkatalysierte Systeme bereit zu stellen, benötigen zweikomponentige Systeme (RTV-2) üblicherweise Zinnkatalysatoren, um eine gute Durchhärtung zu gewährleisten. Organische Zinnverbindungen haben starke Auswirkung auf Mensch und Umwelt und einige Spezies sind sogar nachweislich mutagen und reprotoxisch. Es wäre daher aus EHS-Sicht von Vorteil, auf zinnorganische Verbindungen verzichten zu können.
Es hat nicht an Anstrengungen gefehlt, andere Komplexe oder Verbindungen anderer Metalle als Katalysatoren einzusetzen. Ausserdem wurden verschiedene organische Basen als Katalysatoren eingesetzt. Vielen alternativen Katalysatoren ist allerdings gemeinsam, dass sie nicht oder nur schlecht in der Polysiloxanmatrix der Silikone mischbar sind und zur Entmischung neigen. Dadurch wird die Katalyse ineffizient, und die Lagerstabilität resultierender Mischungen kann sehr eingeschränkt sein. Weiter sind viele der beschriebenen Systeme nicht kommerziell erhältlich und nur mit grossem Aufwand synthetisierbar und damit teuer.
Aus der Literatur, beispielsweise WO 2015/026687 A1 oder EP2840087, ebenfalls bekannt sind funktionalisierte Guanidine, die durch die Anbringung von Oligosiloxansubstituenten an den Guanidinen in einer PDMS Matrix verträglich gemacht wurden und als Katalysatoren zur Härtung von RTV-Silikonen eingesetzt werden können. Nachteile dieser Katalysatoren sind jedoch Inkompatibilitäten mit gängigen Haftvermittlern auf Aminosilan-Basis, was bei umweltbedingten Belastungen zu Adhäsionsverlust führt.

### Darstellung der Erfindung

Aufgabe der vorliegenden Erfindung ist es daher, eine zinnfreie, zweikomponentige Silikonzusammensetzung bereitzustellen, welche gute Adhäsion auch unter schwierigen Umweltbedingungen zeigt und nicht zur Entmischung oder schlechter Lagerstabilität neigt.

Überraschenderweise wurde gefunden, dass Silikonzusammensetzungen gemäss Anspruch 1 diese Aufgabe lösen.
Durch den Einsatz von einem Guanidinkatalysator mit Siloxanfunktionen in Kombination mit einem speziellen Haftvermittler ist es möglich, zinnfreie Zusammensetzungen zu formulieren, die nicht zu Entmischung neigen und auch unter feuchtwarmen Bedingungen nicht die Adhäsion verlieren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine vernetzbare Silikonzusammensetzung, umfassend
a. mindestens ein kondensationsvernetzbares Polydiorganosiloxan **P** mit Silanol-, Alkoxysilyl- , insbesondere Methoxysilyl- und/ oder Ethoxysilyl-, Carboxysilyl- , insbesondere Acetoxysilyl-, Ketoximinosilyl-, Amidosilyl-, und/oder Aminosilyl-Endgruppen;
b. mindestens einen Silan- oder Siloxan-Vernetzer **V** für das kondensationsvernetzbare Polydiorganosiloxan, bevorzugt tri- oder tetrafunktionelle Silane oder deren Hydrolysate, Teilhydrolysate und/oder Kondensate;
c. mindestens einen Vernetzungskatalysator **K1** der allgemeinen Formel (I), 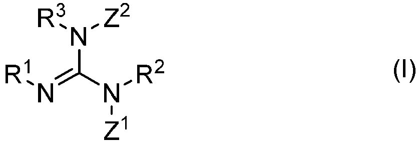 wobei Z¹ und Z² unabhängig voneinander H oder lineare oder verzweigte Oligodiorganylsiloxane der allgemeinen Formel (II) und (III) darstellen, 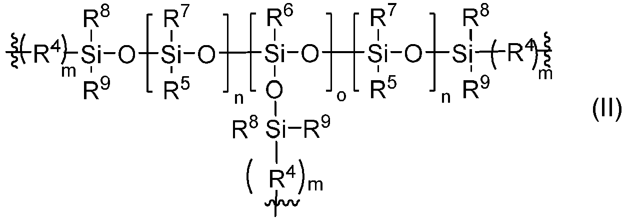 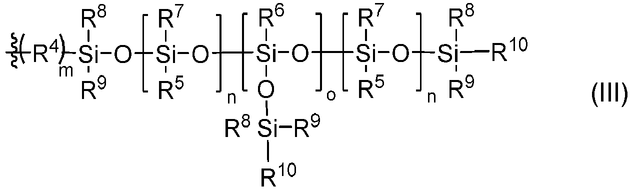
   wobei Index n einen ganzzahligen Wert von 1 bis 400, bevorzugt 2 bis 100, insbesondere 5 bis 50, darstellt; Index m einen ganzzahligen Wert von 1, 2 oder 3 darstellt; Index o einen ganzzahligen Wert von 0 bis 10 darstellt; und
   die Reste R⁵ bis R¹⁰ unabhängig voneinander einen einwertigen, aliphatischen, linearen oder verzweigten C1 bis C8 Alkylrest darstellen, der optional Ringstrukturen und/oder Heteroatome ausgewählt aus der Gruppe Halogene, N, O, P oder S, enthält, insbesondere einen Methyl-, Ethyl, Propyl-, Phenyl- oder Trifluorpropylrest;
   der Rest R⁴ einen zweiwertigen, aliphatischen, linearen oder verzweigten C1 bis C8 Alkylrest darstellt, der optional Ringstrukturen und/oder Heteroatome ausgewählt aus der Gruppe Halogene, N, O, P oder S, enthält; und
   die Reste R¹ bis R³ unabhängig voneinander ein Wasserstoffatom oder einen aliphatischen, linearen oder verzweigten C1 bis C8 Alkylrest darstellen, der optional Ringstrukturen und/oder Heteroatome ausgewählt aus der Gruppe Halogene, N, O, P oder S, enthält, wobei die Reste R¹ bis R³ zu einem oder zwei aliphatischen oder aromatischen Ringen geschlossen vorliegen können und das Guanidin der Formel (I) gegebenenfalls protoniert vorliegen kann;
   mit der Massgabe, dass mindestens ein Z₁ oder Z₂ einem linearen oder verzweigten Oligodiorganylsiloxan der Formel (II) oder Formel (III) entspricht;
d. mindestens einen Haftvermittler **H** der allgemeinen Formel (IV), 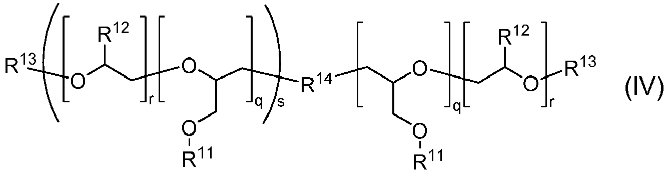
   wobei Indizes q, r und s unabhängig voneinander einen ganzzahligen Wert zwischen 0 und 10, bevorzugt zwischen 0 und 5, insbesondere zwischen 0 und 2 darstellen, mit der Massgabe, dass die Summe q + r ≥ 1 ist;
   die Reste R¹¹ unabhängig voneinander für einen einwertigen, linearen oder verzweigten C1-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
   die Reste R¹² unabhängig voneinander für einen einwertigen, linearen oder verzweigten C3-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
   die Reste R¹³ unabhängig voneinander für ein Wasserstoffatom oder einen Rest R¹¹ stehen;
   die Reste R¹⁴ unabhängig voneinander für einen zweiwertigen, linearen oder verzweigten C1-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
e. optional einen Metallkatalysator **K2** umfassend ein Element ausgewählt aus den Gruppen 4, 8, 12, 13 und 15 des Periodensystems der Elemente, bevorzugt einen Metallkatalysator umfassend Bi, Zn, Zr oder Ti;
f. optional einen oder mehrere Füllstoffe **F,** die optional oberflächenbehandelt, insbesondere hydrophobiert vorliegen können, insbesondere gefällte oder pyrogene Kieselsäure, gefällte oder gemahlene Kreide, Gummimehl, Glasperlen, Glasmehl, Talkum, Quarzit oder Tonmineralien, insbesondere Kaolin;
g. optional weitere Zusätze umfassend einen oder mehrere ausgewählt aus der Gruppe Weichmacher, Haftvermittler, Verzögerer, Beschleuniger, Entschäumer, Dispergierhilfen, Benetzungshilfsmittel Thixotropiermittel, Biozide, Pigmente und organische Extender;
wobei der Haftvermittler **H** aus mindestens einem Epoxid und mindestens einem Amin hergestellt ist, die in einem Molverhältnis von Epoxidgruppen zu Amingruppen von 1:1 bis 2:1 eingesetzt wurden.

Die gewellten Linien in Formeln (II) und (III) stellen die Orte dar, wo diese Strukturen an das Guanidin der Formel (I) über eine chemische Bindung verbunden sind.

Mit "Poly" beginnende Substanznamen wie beispielsweise Polydimethylsiloxan bezeichnen im vorliegenden Dokument Substanzen, die formal zwei oder mehr der in ihrem Namen vorkommenden funktionellen Gruppen, wie beispielsweise Dimethylsiloxangruppen, pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer oligomeren oder polymeren Mischung von Molekülen oder Molekül-Resten bezeichnet. Es wird üblicherweise mittels Gelpermeationschromatographie (GPC) gegen Polydimethylsiloxan als Standard bestimmt.
Mit dem Begriff "Viskosität" wird die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.
Als "Raumtemperatur" wird eine Temperatur von 23°C bezeichnet.
Alle in diesem Dokument erwähnten Industriestandards und Normen beziehen sich, sofern nichts anderes angegeben, auf die zum Zeitpunkt der Einreichung der Erstanmeldung gültige Fassung.

Das mindestens eine kondensationsvernetzbare Polydiorganosiloxan P in der erfindungsgemässen Silikonzusammensetzung ist insbesondere ein Polydiorganosiloxan der Formel (V). 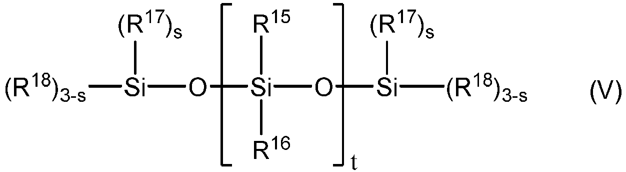 Dabei stehen die Reste R¹⁵, R¹⁶ und R¹⁷ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.
Insbesondere stehen die Reste R¹⁵ und R¹⁶ für Alkylreste mit 1 bis 5, insbesondere mit 1 bis 3, C-Atomen, bevorzugt für Methylgruppen. Die Reste R¹⁷ stehen unabhängig voneinander insbesondere für Phenyl-, Vinyl oder für Methylgruppen.
Die Reste R¹⁸ stehen unabhängig voneinander für Hydroxyl-, Alkoxy- , insbesondere Methoxy- und/ oder Ethoxy-, Carboxy- , insbesondere Acetoxy-, Ketoxim-, Amid-, und/oder Amino- mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.
Der Index s steht für einen Wert von 0, 1 oder 2, insbesondere für 0 oder 1. Der Index t kann in breiten Bereichen in Abhängigkeit vom Einsatzzweck gewählt werden, im Allgemeinen so, dass ein Silikonöl erhalten wird. Der Index t kann z.B. im Bereich von 10 bis 10000 und bevorzugt 100 bis 1000 liegen. Der Index t wird bevorzugt so gewählt, dass das Polydiorganosiloxan **P** die nachstehend angegebene Viskosität aufweist.

Die Viskosität der eingesetzten Polydiorganosiloxane **P** kann in Abhängigkeit vom Einsatzzweck in breiten Bereichen variieren. Das erfindungsgemäss eingesetzte Polydiorganosiloxan **P** kann bei einer Temperatur von 23°C z.B. eine Viskosität von 10 bis 500'000 mPa.s, bevorzugt 1000 bis 350'000 mPa.s und insbesondere von 6'000 bis 120'000 mPa.s, aufweisen.

Die hier angegebenen Viskositäten können in Anlehnung an DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Stehen die Reste R¹⁸ für Ketoximgruppen, handelt es sich vorzugsweise um Ketoximgruppen mit jeweils 1 bis 13 C-Atomen und der Index s steht insbesondere für einen Wert von 0.
Bevorzugte Ketoximgruppen sind dabei Dialkylketoximgruppen deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethyl-methylketoximgruppe.
Bevorzugt stehen die Reste R¹⁸ für Hydroxylgruppen und der Index s für einen Wert von 2.

Geeignete Polydiorganosiloxane **P,** wie sie in Formel (V) dargestellt sind, sind bekannt und kommerziell erhältlich. Auch die Herstellung derartiger Polydiorganosiloxane erfolgt in bekannter Art und Weise, wie beispielsweise beschrieben in EP0658588.

Die zweikomponentige Silikonzusammensetzung umfasst weiter einen oder mehrere monomere Silane und/oder oligomere Siloxane als Vernetzer **V** für das Polyorganosiloxan **P,** wobei ein oligomeres Siloxan ein Kondensationsprodukt von monomeren Silanvernetzern ist. Monomere Silanvernetzer und auch oligomere Kondensationsprodukte davon sind als Vernetzer für Silikonformulierungen bekannt.

Monomere Silanvernetzer sind im allgemeinen Silanverbindungen, die zwei oder mehr, z.B. drei oder mehr und bevorzugt 3 oder 4, funktionelle Gruppen enthalten. Unter funktionellen Gruppen werden hier insbesondere Gruppen verstanden, die mit funktionellen Gruppen des Polyorganosiloxans unter Bildung einer Bindung reagieren können, wobei die Reaktion gegebenenfalls durch Hydrolyse, Alkoholyse oder eine andere Abspaltungsreaktion bei der funktionellen Gruppe des Polydiorganosiloxans und/oder des Vernetzers eingeleitet wird. Die funktionellen Gruppen können an jeder Stelle des Silanvernetzers vorliegen, bevorzugt sind sie an einem Si-Atom des monomeren Silanvernetzers gebunden.

Beispiele für funktionelle Gruppen, die ein monomerer Silanvernetzer aufweisen kann, sind Alkoxygruppen, wie C1 bis C5-Alkoxygruppen, bevorzugt Methoxy-, Ethoxy- oder Propoxygruppen, Acetoxygruppen, Amidgruppen, bevorzugt N-Alkylamidgruppen, insbesondere N-Methylbenzamid- oder N-Methylacetamidgruppen, Amingruppen, bevorzugt alkylierte Amingruppen wie beispielsweise Cyclohexylamin, insbesondere aber dialkylierte Amingruppen wie beispielsweise N,N-Diethylamin, Halogen-Atome, insbesondere Chlor und/oder Brom-Atome sowie Hydrido-Substituenten oder Oximgruppen. Als Beispiele für Oximgruppen wird auf die vorstehend beschriebenen bevorzugten Ketoximgruppen verwiesen. Diese funktionellen Gruppen sind im Allgemeinen direkt an einem Si-Atom des monomeren Silanvernetzers gebunden.

Monomere Silanvernetzer **V** können z.B. eine der folgenden allgemeinen Formeln (VI) bis (VIII) aufweisen.

(R¹⁹)ᵤ-Si-(R²⁰)₄₋ᵤ (VI)

(R²⁰)₃-Si-R²¹-Si-(R²⁰)₃ (VII)

N(H)ᵥ(Si-(R²⁰)₃)₃₋ᵥ (VIII)

Dabei steht der Rest R¹⁹ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Beispiele für R¹⁹ sind Alkylgruppen mit 1 bis 5 C-Atomen, bevorzugt Methyl, Ethyl oder Propyl, Vinyl, Arylgruppen, wie Phenyl, Cycloalkylgruppen, wie Cyclohexyl, sowie substituierte Alkylgruppen, mit 1 bis 8 C-Atomen, bevorzugt Methyl, Ethyl oder Propyl, die mit einem oder mehreren Substituenten, wie gegebenenfalls substituiertes Amino (NH₂, NHR, NR₂, wobei R unabhängig voneinander Alkyl, Aryl oder Cycloalkyl ist), Mercapto, Glycidoxy, Methacrylat, Acrylat oder Carbamato, funktionalisiert sind.

Der Rest R²⁰ steht unabhängig voneinander für eine Hydroxylgruppe oder für eine Alkoxy-, Acetoxy- oder Ketoximgruppe mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Ketoximgruppen und Alkoxygruppen sind bereits vorstehend beschrieben worden.

Weiterhin steht der Index u für einen Wert von 0 bis 4, mit der Massgabe, dass falls u für einen Wert von 3 oder 4 steht, mindestens u-2 Reste R¹⁹ jeweils mindestens eine mit der funktionellen Gruppen des Polydiorganosiloxans reaktive Gruppe aufweisen. Insbesondere steht u für einen Wert von 0, 1 oder 2, bevorzugt für einen Wert von 0 oder 1.

R²¹ ist eine zweiwertige Alkylengruppe, z.B. eine C1 bis C6-Alkylengruppe, insbesondere Methylen, Ethylen oder Hexylen, eine Arylengruppe, wie Phenylen, oder eine Cycloalkylengruppe, wobei Alkylen bevorzugt ist. Der Index v steht für 0, 1 oder 2, bevorzugt 1.

Für die Wahl mindestens eines Silans der Formeln (VI)-(VIII) als Vernetzer V für Polydiorganosiloxane können unterschiedliche Anforderungen an die Silikonzusammensetzung ausschlaggebend sein. Einerseits spielt die Reaktivität des Silans eine wichtige Rolle, wobei grundsätzlich höherreaktive Silane bevorzugt werden. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt, da die flüchtigen Alkoholspaltprodukte die bei der Vernetzung entstehen im letzteren Fall toxikologisch bedenklicher sind.

Konkrete Beispiele für monomere Silanvernetzer **V** sind Methyltrimethoxysilan, Chlormethyltrimethoxysilan, Vinyltrimethoxysilan, Phenyltrimethoxysilan, Propyltrimethoxysilan, 3-Mercaptopropyltrimethoxysilan, 3-Aminopropyltrimethoxysilan, 3-Methacryloxypropyltrimethoxysilan, 3-Glycidoxypropyltrimethoxysilan, 2-Aminoethyl-3-aminopropyltrimethoxysilan, 1,2-Bis-(trimethoxysilyl)ethan, Bis-(trimethoxysilylpropyl)amin, N-(n-Butyl)-3-aminopropyltrimethoxysilan, N-Cyclohexylaminomethyltrimethoxysilan, Methacryloxymethyltrimethoxysilan, O-Methylcarbamatomethyltrimethoxysilan oder die entsprechenden Verbindungen, bei denen die Methoxygruppe durch Ethoxy, Propoxy, Oxim bzw. Ketoxim ersetzt ist, wie beispielsweise Methyltriethoxysilan, Vinyltriethoxysilan, Phenyltriethoxysilan, Methyltripropoxysilan und Phenyltripropoxysilan, sowie beispielsweise Bis-(N-methylacetamido)methylethoxysilan, Tris-(methylethylketoximo)methylsilan, Tris-(methylethylketoximo)vinylsilan und Tris-(methylethylketoximo)phenylsilan. Weitere Beispiele sind Tetramethoxysilan, Tetraethoxysilan, Tetra-n-butoxysilan und Tetra-n-propoxysilan.

Bei den oligomeren Siloxanen geeignet als Vernetzer V handelt es sich um Kondensationsprodukte von einem oder mehreren solcher monomeren Silanvernetzer. Solche oligomeren Siloxane sind bekannt und im Handel erhältlich, z.B. unter den Handelsnamen Dynasylan® 1146 oder Dynasylan® 6490 von der Firma Evonik Degussa GmbH. Oligomere von funktionellen Silanen sind kompliziert aufgebaute 3-dimensionale Verbindungen. Das oligomere Siloxan kann z.B. aus Hydrolyse und Kondensation von einem oder mehreren gleichen oder unterschiedlichen monomeren Silanvernetzern gebildet werden.

Ein solches oligomeres Siloxan enthält funktionelle Gruppen, die aus den für ihre Synthese verwendeten monomeren Silanvernetzern stammen. Beispielsweise führt eine erste Kondensation von zwei Tetramethoxysilan-Molekülen zu einem Dimer, das sechs funktionelle Gruppen enthält; aus jeweils einer funktionellen Gruppe jedes Moleküls wird durch Kondensation die Verknüpfung gebildet wird. Wie bereits ausgeführt, kann die Struktur der gebildeten Oligomere kompliziert sein. Die Anzahl der funktionellen Gruppen im Oligomer kann nach Kondensationsgrad, Art der Kondensation und eingesetzten monomeren Silanvernetzer varieren, ist aber zumindest 2, in der Regel aber grösser, z.B. 4 oder mehr.
Beispielsweise sind geeignete oligomere Siloxane sind Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Der Kondensationsgrad des oligomeren Siloxans, d.h. die Zahl der miteinander kondensierten monomeren Silanvernetzer, kann in breiten Bereichen je nach Anwendungszweck variieren, kann aber z.B. im Bereich von 2 bis 200 und bevorzugt von 4 bis 50 liegen. Es ist verständlich, dass der Kondensationsgrad, insbesondere bei höheren Kondensationsgraden, häufig lediglich einen Mittelwert darstellt.

Selbstverständlich kann als Vernetzer V für die erfindungsgemässe Silikonzusammensetzung auch eine beliebige Mischung der vorhergehend genannten Silane eingesetzt werden.

Der Anteil des Vernetzers V für Polydiorganosiloxane beträgt vorzugsweise 0.5 bis 5 Gew.-%, insbesondere 0.6 bis 4 Gew.-%, bevorzugt 0.7 bis 3 Gew.-%, der gesamten Silikonzusammensetzung.

Die erfindungsgemässe Silikonzusammensetzung umfasst weiterhin mindestens einen Katalysator **K1** für die Vernetzung von Polydiorganosiloxanen, wobei der Katalysator **K1** ein Guanidin darstellt, welches weiter oben mit Formel (I) beschrieben ist.
Ein allgemeiner Katalysator für die Vernetzung von Polydiorganosiloxanen ist in der Lage, die Hydrolyse und/oder Kondensation von hydrolysierbaren und/oder hydrolysierten Silanen, Siloxanen und Polysiloxanen zu katalysieren. Diese Reaktionen führen in den Silikonzusammensetzungen wie in der vorliegenden Erfindung beschrieben zu einer Vernetzung der Polydiorganosiloxanketten mit Hilfe der enthaltenen Vernetzer **V.** Dabei kann es sich bei den als Katalysator geeigneten Verbindungen zum Beispiel um organische Moleküle handeln, wie etwa basische Verbindungen der Formel (I), oder um Metallkomplexe.

Bevorzugt besitzt der Katalysator **K1** zwei oder drei Guanidingruppen pro Molekül, insbesondere zwei Guanidingruppen. Unter diesen Diguanidinen oder Triguanidinen sind folgende Strukturen der Formeln (la) bis (Ig) besonders bevorzugt.

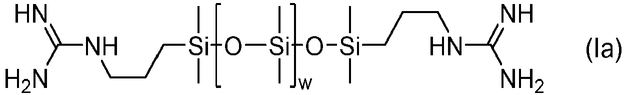

Index w steht in Formel (la) für eine ganze Zahl von 1 bis 50, bevorzugt für 5, 10 oder 50.

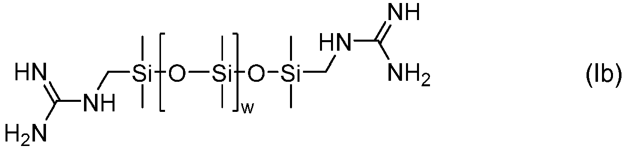

Index w steht in Formel (Ib) für eine ganze Zahl von 1 bis 50, bevorzugt für 5, 10 oder 50.

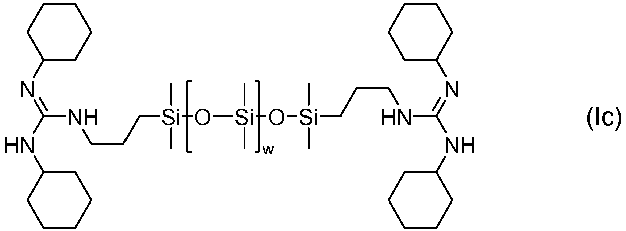

Index w steht in Formel (Ic) für eine ganze Zahl von 1 bis 50, bevorzugt für 5, 10 oder 50.

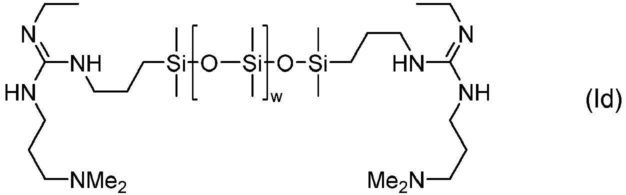

Index w steht in Formel (Id) für eine ganze Zahl von 1 bis 50, bevorzugt für 5, 10 oder 50.

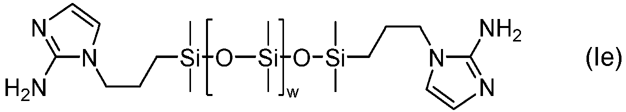

Index w steht in Formel (Ie) für eine ganze Zahl von 1 bis 25, bevorzugt für 5, 10 oder 20.

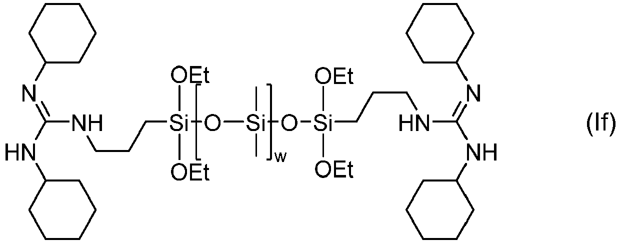

Index w steht in Formel (If) für eine ganze Zahl von 1 bis 50, bevorzugt für 5, 10 oder 50.

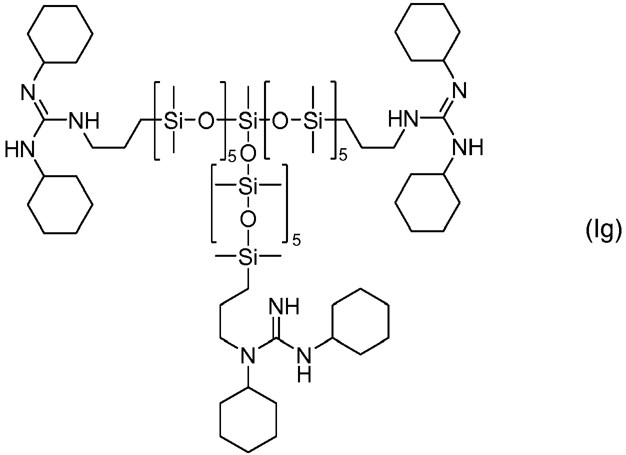

Bevorzugt wird der Katalysator **K1** in der Härterkomponente **B** der zweikomponentigen Silikonzusammensetzung eingesetzt, mit einer Menge an Guanidingruppen von bevorzugt zwischen 0.5 Gew.-% und 0.6 Gew.-% Guanidin, bezogen auf die Härterkomponente **B.**

Weiterhin umfasst die erfindungsgemässe Zusammensetzung optional aber bevorzugt einen Metallkatalysator **K2** umfassend ein Element ausgewählt aus den Gruppen 4, 8, 12, 13 und 15 des Periodensystems der Elemente, bevorzugt ein Metallkatalysator umfassend Bi, Zn, Zr oder Ti.

Der Katalysator **K2** ist bevorzugt eine Bismutat, ein Zinkkomplex, ein Zirkonat oder ein Titanat bzw. Organotitanat. Diese sind im Handel erhältlich. Es ist auch möglich und in gewissen Fällen sogar bevorzugt, Mischungen verschiedener Katalysatoren einzusetzen. Am meisten bevorzugt sind Titanate.

Bevorzugt besitzen die Metallkatalysatoren **K2** mehrzähnige, insbesondere zweizähnige Liganden, wie beispielsweise Acetat- und andere Carbonsäureliganden, wie beispielsweise Neodecanoat- oder Octoatliganden, oder Acetylacetonat- oder Acetamidliganden.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei z.B. diejenigen, die ausgewählt sind aus einer Alkoxygruppe, Sulfonatgruppe, Carboxylatgruppe, Dialkylphosphatgruppe, Dialkylpyrophosphatgruppe und Acetylacetonatgruppe. Bevorzugte Titanate sind z.B. Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.
Geeignete Titanate sind beispielsweise unter den Handelsnamen Tyzor® AA, GBA, GBO, AA-75, AA-65, AA-105, DC, BEAT, IBAY kommerziell erhältlich von der Firma Dorf Ketal oder unter den Handelsnamen Tytan™ PBT, TET, X85, TAA, ET, S2, S4 oder S6 kommerziell erhältlich von Borica.

Als Zinkkomplexe eignen sich insbesondere Zn(II) Komplexe mit mehrzähnigen Liganden, wie beispielsweise Zn(II) Acetamid Komplexe oder Zn(II) Acetat.

Weiterhin bevorzugt sind Zirkonate und Bismutate.
Geeignete Zirkonate sind beispielsweise unter den Handelsnamen Tyzor® NBZ, NPZ, TEAZ, 212, 215, 217, 223 kommerziell erhältlich von der Firma Dorf Ketal oder unter den Handelsnamen K-Kat 4205 oder K-Kat XC-6212 von der Firma King Industries.
Am meisten bevorzugte Bismutate sind Bismutcarboxylate. Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi® Kat (Fa. Borchers GmbH) oder Tegokat® (Fa. Goldschmidt TIB GmbH), Neobi® 200, Fa. Shepherd, Coscat®, Fa. Caschem. Weiterhin geeignete Bismutate sind beispielsweise erhältlich unter dem Handelsnamen K-Kat 348 und K-Kat XC-8203 von der Firma King Industries.

Der Gewichtsanteil an Katalysator **K2** beträgt vorzugsweise 0.1 bis 6 Gewichtsteile, insbesondere 0.2 bis 5 Gewichtsteile, bevorzugt 0.5 bis 3 Gewichtsteile, bezogen auf 100 Gewichtsteile Polydiorganosiloxan **P** in der gesamten Silikonzusammensetzung.

Die erfindungsgemässe Zusammensetzung enthält keine zinnorganischen Verbindungen. Das bedeutet, dass zinnorganische Verbindungen zu höchstens 0.1 Gew.-%, bevorzugt höchstens 0.05 Gew.-%, insbesondere höchstens 0.01 Gew.-%, bezogen auf die gesamte Zusammensetzung enthalten sind. Am meisten bevorzugt sind zinnorganische Verbindungen mit gängigen Analyseverfahren nicht in der Zusammensetzung nachweisbar.

Die erfindungsgemässe Silikonzusammensetzung umfasst weiterhin mindestens einen Haftvermittler **H,** nach der weiter oben dargestellten Formel (IV).
Beim Haftvermittler **H** handelt es sich um ein substituiertes Ethylenglykol, das über dem Fachmann bekannte Synthesewege aus Epoxiden und primären oder sekundären Aminen über eine Epoxy-Amin-Additionsreaktion hergestellt wird. Bevorzugt umfasst Haftvermittler **H** mindestens eine reaktive Silangruppe, insbesondere eine Alkoxysilangruppe, bevorzugt eine Methoxy- und/oder Ethoxysilangruppe. Von diesen am meisten bevorzugt sind Dialkoxy- und Trialkoxysilangruppen, inbesondere Trialkoxysilangruppen, wie Trimethoxysilangruppen und/oder Triethoxysilangruppen.

Besonders bevorzugte Rohstoffe für die Herstellung des Haftvermittlers **H** sind epoxyfunktionelle Silane und aminfunktionelle Silane, wie beispielsweise 3-Aminopropyltrimethoxysilan, 3-Glycidoxypropyltrimethoxysilan, 2-Aminoethyl-3-aminopropyltrimethoxysilan, Bis-(trimethoxysilylpropyl)amin, N-(n-Butyl)-3-aminopropyltrimethoxysilan und N-Cyclohexylaminomethyltrimethoxysilan sowie die entsprechenden Verbindungen mit Ethoxygruppen anstelle von Methoxygruppen. Diese Rohstoffe erlauben die Herstellung von besonders geeigneten Haftvermittlern **H,** weil die Rohstoffe leicht und günstig zugänglich sind, die resultierenden Haftvermittler **H** durch die vorhandenen Amin- und Hydroxylgruppen sehr gute Haftvermittlung ermöglichen und durch die reaktiven Silangruppen ausserdem mit dem Polydiorganoisiloxan **P** und anderen silanfunktionellen Bestandeteilen der erfindungsgemässen Zusammensetzung reagieren können und so einen beständigen Verbund mit der ausgehärteten Zusammensetzung erhalten.

Bevorzugt wird Haftvermittler **H** vorgängig hergestellt und als fertiges Reaktionsprodukt in die erfindungsgemässe Zusammensetzung zugegeben. Es ist jedoch auch möglich, die Rohstoffe, wie beispielsweise Amine und Epoxide, als Einzelsubstanzen in die erfindungsgemässe Zusammensetzung zuzugeben, worauf sich der Haftvermittler **H** in situ bildet. Die vorgängige Herstellung ist aber bevorzugt.

In einer bevorzugten Ausführungsform wird der Haftvermittler **H** aus mindestens einem Epoxysilan und mindestens einem Aminosilan hergestellt.

Der Haftvermittler **H** wird aus Aminen, beispielsweise Aminosilanen, sowie Epoxiden, beispielsweise Glycidylsilanen, hergestellt, und es wird ein molares Verhältnis von Epoxidgruppen zu Amingruppen von 1:1 bis 2:1 gewählt, insbesondere ein Verhältnis von 2:1.

Haftvermittler **H** der allgemeinen Formel (IV) sind im Normalfall Gemische von Einzelsubstanzen, beispielsweise Gemische von oligomeren oder polymeren Substanzen, die mehrere Einzelstrukturen der allgemeinen Formel (IV) umfassen.

Die Menge an Haftvermittler **H** in der erfindungsgemässen Zusammensetzung liegt bevorzugt zwischen 5 und 25 Gew.-%, insbesondere zwischen 7 und 20 Gew.-%, besonders bevorzugt zwischen 10 und 15 Gew.-%, bezogen auf die Härterkomponente **B.**
Bezogen auf die gesamte Zusammensetzung liegt der bevorzugte Gehalt an Haftvermittler **H** zwischen 0.5 und 2.5 Gew.-%, insbesondere zwischen 0.7 und 2 Gew.-%, besonders bevorzugt zwischen 1 und 1.5 Gew.-%.

Als Haftvermittler **H** sind folgende Strukturen der Formeln (IVa) bis (IVq) besonders bevorzugt.

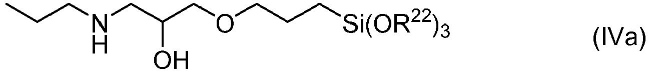

Rest R²² steht in Formel (IVa) für eine Methyl- oder Ethylgruppe.

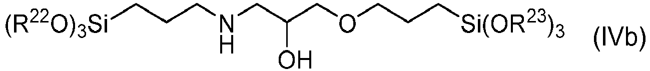

Reste R²² und R²³ stehen in Formel (IVb) unabhängig voneinander für eine Methyl- oder Ethylgruppe.

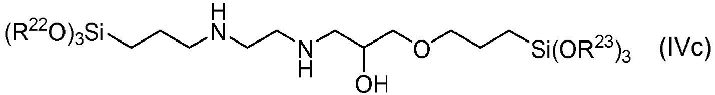

Reste R²² und R²³ stehen in Formel (IVc) unabhängig voneinander für eine Methyl- oder Ethylgruppe.

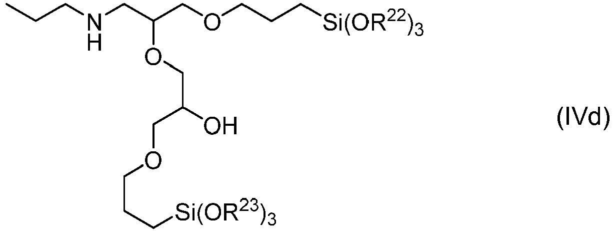

Reste R²² und R²³ stehen in Formel (IVd) unabhängig voneinander für eine Methyl- oder Ethylgruppe, bevorzugt beide für eine Methylgruppe oder beide für eine Ethylgruppe.

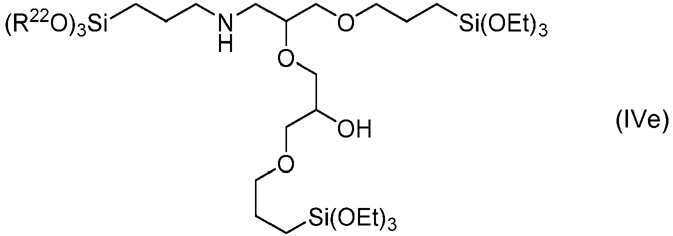

Rest R²² steht in Formel (IVe) für eine Methyl- oder Ethylgruppe.

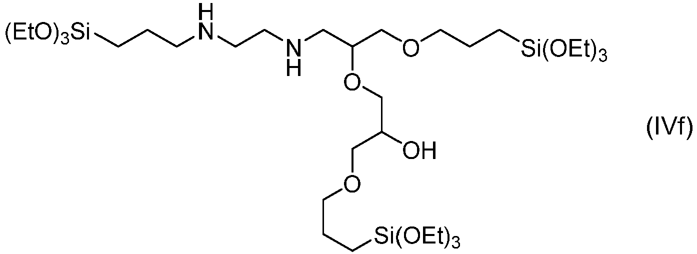

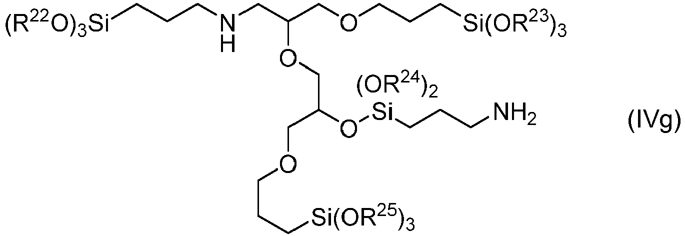

Reste R²², R²³, R²⁴ und R²⁵ stehen in Formel (IVg) unabhängig voneinander für eine Methyl- oder Ethylgruppe, bevorzugt stehen alle für eine Methylgruppe, alle für eine Ethylgruppe oder R²² und R²⁴ für eine Methylgruppe und R²³ und R²⁵ für eine Ethylgruppe.

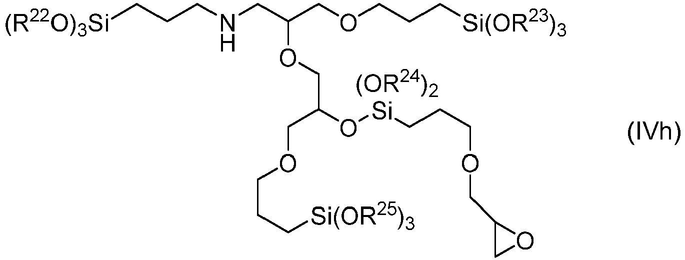

Reste R²², R²³, R²⁴ und R²⁵ stehen in Formel (IVh) unabhängig voneinander für eine Methyl- oder Ethylgruppe, bevorzugt stehen alle für eine Methylgruppe, alle für eine Ethylgruppe oder R²³ und R²⁴ und R²⁵ für eine Methylgruppe und R²² für eine Ethylgruppe.

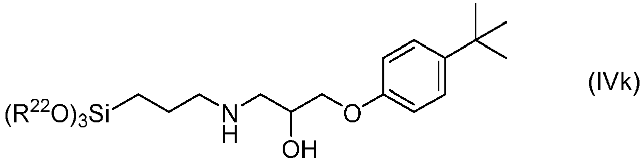

Rest R²² steht in Formel (IVk) für eine Methyl- oder Ethylgruppe.

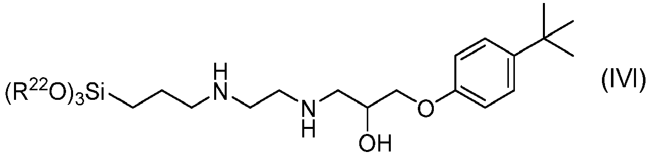

Rest R²² steht in Formel (IVI) für eine Methyl- oder Ethylgruppe.

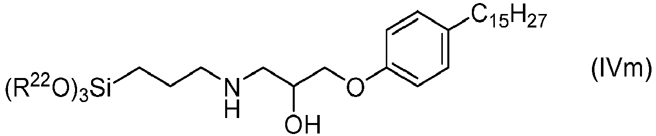

Rest R²² steht in Formel (IVm) für eine Methyl- oder Ethylgruppe.

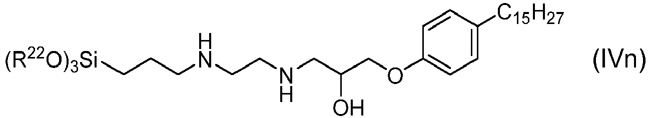

Rest R²² steht in Formel (IVn) für eine Methyl- oder Ethylgruppe.

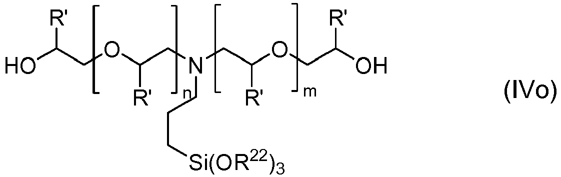

Rest R²² steht in Formel (IVo) für eine Methyl- oder Ethylgruppe. Die Reste R' stehen in Formel (IVo) unabhängig voneinander für ein Wasserstoffatom oder für einen der beiden Reste die in der Formel (IVo') dargestellt sind:

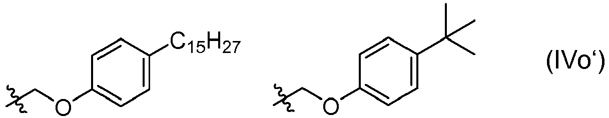

Die Indizes m und n in Formel (IVo) stehen unabhängig voneinander für einen ganzzahligen Wert zwischen 0 und 16.

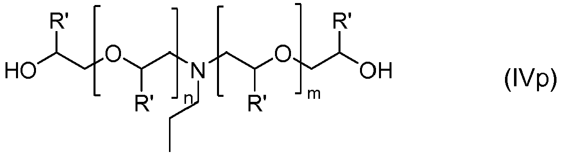

Die Reste R' stehen in Formel (IVp) unabhängig voneinander für ein Wasserstoffatom oder für einen Rest der Formel (IVp'), mit der Massgabe, dass mindestens ein Rest R' der Formel (IVp) ein Rest der Formel (IVp') darstellt:

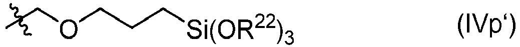

Rest R²² steht in Formel (IVp') für eine Methyl- oder Ethylgruppe. Die Indizes m und n in Formel (IVp) stehen unabhängig voneinander für einen ganzzahligen Wert zwischen 0 und 16.

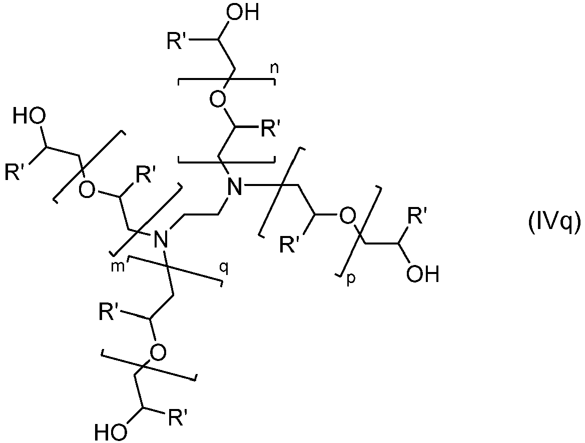

Die Reste R' stehen in Formel (IVq) unabhängig voneinander für ein Wasserstoffatom oder für einen Rest der Formel (IVq'), mit der Massgabe, dass mindestens ein Rest R' der Formel (IVq) ein Rest der Formel (IVq') darstellt:

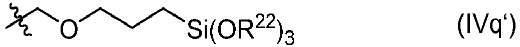

Rest R²² steht in Formel (IVq) für eine Methyl- oder Ethylgruppe. Die Indizes m, n und p in Formel (IVq) stehen unabhängig voneinander für einen ganzzahligen Wert zwischen 0 und 16.

Die gewellten Linien in Formeln (IVo'), (IVp') und (VIq') stellen die Orte dar, wo diese Strukturen an Stelle des Restes R' in den Formeln (IVo), (IVp) und (IVq) über eine chemische Bindung verbunden sind.

Die erfindungsgemässe Silikonzusammensetzung umfasst weiterhin optional aber bevorzugt einen oder mehrere Füllstoffe **F,** die optional oberflächenbehandelt, insbesondere hydrophobiert vorliegen können, insbesondere gefällte oder pyrogene Kieselsäure, gefällte oder gemahlene Kreide, Gummimehl, Glasperlen, Glasmehl, Talkum, Quarzit oder Tonmineralien, insbesondere Kaolin.

Als Füllstoff **F** geeignet sind alle dem Fachmann im Gebiet der Formulierung von Silikonzusammensetzungen bekannten Füllstoffe.

Bevorzugt als Füllstoff **F** ist Kreide, insbesondere Calciumcarbonat, z.B. in Form von Kalkstein, Kreidegestein, Muschelkalk oder Marmor. Dabei kann das Calciumcarbonat aus natürlichen Vorkommen, beispielsweise Marmorbrüchen, gewonnen oder mit bekannten Verfahren, beispielsweise Fällungsreaktionen, hergestellt worden sein. Natürliches Calciumcarbonat kann Anteile an weiteren Mineralien, z.B. Magnesiumcarbonat enthalten. Weiter kann das Calciumcarbonat gemahlen sein und es kann unbehandelt oder modifiziert, insbesondere oberflächenbehandelt, also hydrophobiert, vorliegen. Die Oberflächenbehandlung kann beispielsweise durch Behandlung mit Fettsäuren, insbesondere Stearaten, bevorzugt mit Calciumstearat, erfolgen. Selbstverständlich können auch Mischungen verschiedener Calciumcarbonate eingesetzt werden.

Ein weiterer bevorzugter Füllstoff **F** ist Kieselsäure.
Geeignete Kieselsäuren sind gefällte oder pyrogene Kieselsäuren, die oberflächenhydrophobiert sein können oder die unbehandelt, d.h. hydrophil, vorliegen können.
Als hydrophobierte Kieselsäuren eignen sich typischerweise Silikonisierte und/oder silanisierte Kieselsäuren, welche dann einen Kohlenstoffgehalt von 0.6 bis 6.5 Gew.-% bezogen auf das Gesamtgewicht der Kieselsäure aufweisen. Geeignete Kieselsäuren können aber auch nicht behandelt, also hydrophil, vorliegen. Es können weiterhin auch Mischungen verschiedener Kieselsäuren eingesetzt werden.

Der mindestens eine Füllstoff **F** der bevorzugt in der erfindungsgemässen Zusammensetzung vorhanden ist beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es ist möglich und in bevorzugten Ausführungsformen sogar vorteilhaft, verschiedene Füllstoffe in der erfindungsgemässen Silikonzusammensetzung zu kombinieren.

Beispiele für geeignete weitere Füllstoffe sind organische oder anorganische Füllstoffe, welche gegebenenfalls mit Fettsäuren, insbesondere Stearinsäure, beschichtet sind, kalzinierte Kaoline, Aluminiumoxide, Aluminiumhydroxide, Russ, insbesondere industriell hergestellter Russ, Aluminiumsilicate, Magnesium-Aluminiumsilicate, Zirkoniumsilicate, Quarzmehl, Cristobalitmehl, Diatomeenerde, Glimmer, Eisenoxide, Titanoxide, Zirconiumoxide, Gips, Annalin, Bariumsulfat, Borcarbid, Bornitrid, Graphit, Kohlefasern, Zeolithe, Glasfasern oder Glashohlkugeln, deren Oberfläche gegebenenfalls mit einem Hydrophobierungsmittel behandelt ist. Bevorzugte weitere Füllstoffe sind kalzinierte Kaoline, Russ, sowie flammhemmende Füllstoffe, wie Hydroxide oder Hydrate, insbesondere Hydroxide oder Hydrate von Aluminium, bevorzugt Aluminiumtrihydroxid.

Eine Gesamtmenge an Füllstoff **F** in bevorzugten Ausführungsformen der erfindungsgemässen Silikonzusammensetzung liegt typischerweise im Bereich von 10 bis 70 Gew.-%, bevorzugt 15 bis 60 Gew.-%, besonders bevorzugt 20 bis 50 Gew.-%, bezogen auf das Gesamtgewicht der Zusammensetzung .

Die erfindungsgemässe Silikonzusammensetzung kann gegebenenfalls noch weitere Bestandteile enthalten.
Derartige zusätzliche Bestandteile sind insbesondere Hilfsstoffe, wie beispielsweise Haftvermittler, Verarbeitungshilfsmittel, Verlaufsmittel, Stabilisatoren, Farbstoffe, Pigmente, Weichmacher, Duftstoffe, Biozide, Thixotropierungsmittel, Rheologiemodifikatoren, Phosphate, Inhibitoren, Hitzestabilisatoren, Antistatika, Flammschutzmittel, Radikalfänger, Wachse und weitere, dem Fachmann bekannte gängige Rohstoffe und Additive. Von solchen Hilfsstoffen können mehrere oder alle oben genannten oder weitere, ungenannte in der erfindungsgemässen Silikonzusammensetzung enthalten sein, und jeder einzelne der zusätzlich enthaltenen Hilfsstoffe ist bevorzugt mit einem Anteil von weniger als 25 Gewichtsteilen, besonders bevorzugt weniger als 15 Gewichtsteilen, am meisten bevorzugt weniger als 10 Gewichtsteilen, bezogen auf 100 Gewichtsteile aller enthaltenen Polydiorganosiloxane **P** in der Zusammensetzung, enthalten.

Beim Einsatz von derartigen optionalen Bestandteilen ist es vorteilhaft, alle genannten, in der Silikonzusammensetzung gegebenenfalls vorhandenen, Bestandteile so auszuwählen, dass die Lagerstabilität der Silikonzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Silikonzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Geeignete Weichmacher für die erfindungsgemässe Silikonzusammensetzung sind insbesondere trialkylsilylterminierte Polydialkylsiloxane, insbesondere trimethylsilylterminierte Polydimethylsiloxane. Bevorzugt sind trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Es ist auch möglich anstatt der Polysiloxan-Weichmacher, organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Silikonzusammensetzung aufweisen.
Der Anteil des Weichmachers beträgt vorzugsweise 2 bis 35 Gew.-%, insbesondere 5 bis 25 Gew.-%, der gesamten Silikonzusammensetzung.

Besonders geeignet als Haftvermittler, die neben dem Haftvermittler H in der erfindungsgemässen Zusammensetzung enthalten sein können, sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.
Es ist dem Fachmann klar, dass bei der Verwendung von Silanen als Haftvermittler die Möglichkeit besteht, dass diese je nach Bedingungen, beispielsweise bei Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil eines neben dem Haftvermittler **H** allfällig zusätzlich enthaltenen Haftvermittlers beträgt vorzugsweise 0.1 bis 15 Gew.-%, insbesondere 0.5 bis 10 Gew.-%, bevorzugt 1 bis 5 Gew.-%, der gesamten zweikomponentigen Silikonzusammensetzung.

Ein weiterer Aspekt der vorliegenden Erfindung ist die Herstellung einer Masse umfassend eine erfindungsgemässe Zusammensetzung wie vorgängig beschreiben durch kontinuierliches, semi-kontinuierliches oder batch-weises Vermischen der einzelnen Bestandteile in Dissolvern, Innenmischern, Zwangsmischern, Planetenmischern, Mischrohren oder Extrudern.

Bei der erfindungsgemässen zweikomponentigen Zusammensetzung handelt es sich insbesondere um eine zweikomponentige Silikonzusammensetzung bestehend aus einer Komponente **A** und einer Komponente **B,** wobei das Polydiorganosiloxan **P,** der Haftvermittler **H,** der Vernetzer **V** und der Katalysator **K1,** sowie allfällig weitere vorhandene Bestandteile so auf die beiden Komponenten aufgeteilt werden, dass die Vernetzungsreaktion erst beim oder nach dem Mischen der beiden Komponenten einsetzt. Insbesondere besteht die zweikomponentige Silikonzusammensetzung aus einer Polymerkomponente **A** umfassend
- das mindestens eine reaktive Polydiorganosiloxanpolymere **P,**
- bevorzugt einen optional hydrophobierten Füllstoff **F,**
- bevorzugt mindestens einen Weichmacher;
   und einer Härterkomponente **B** umfassend
- den mindestens einen Vernetzer **V** für Polydiorganosiloxane,
- den Katalysator **K1,**
- den Haftvermittler **H,**
- bevorzugt einen optional hydrophobierten Füllstoff **F,**
- bevorzugt mindestens einen Weichmacher.

Sowohl Komponente **A** als auch Komponente **B** der beschriebenen zweikomponentigen Silikonzusammensetzung werden unter Ausschluss von Feuchtigkeit hergestellt und aufbewahrt. Getrennt voneinander sind die beiden Komponenten lagerstabil, d.h., sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Silikonzusammensetzung werden die Komponenten **A** und **B,** beispielsweise durch Rühren, Kneten, Walzen oder dergleichen, insbesondere jedoch über einen Statikmischer, miteinander vermischt, wobei es zur Aushärtung der Zusammensetzung kommt. Die Aushärtung der zweikomponentigen Silikonzusammensetzung erfolgt insbesondere bei Raumtemperatur.

Insbesondere können erfindungsgemässe Silikonformulierungen auf Standardausrüstung zum Pumpen, Mischen und Dosieren von RTV-2 Silikonen verarbeitet werden, z.B. hydraulisch betriebene Schöpfkellenpumpen wie Reinhardt-Technik Ecostar 250.

Die erfindungsgemässe zweikomponentige Silikonzusammensetzung wird insbesondere so eingesetzt, dass das Gewichtsverhältnis der Komponente **A** zur Komponente **B** ≥ 1:1, insbesondere von 3:1 bis 15:1, bevorzugt von 7:1 bis 13:1, beträgt.

Bei der Vernetzung der Silikonzusammensetzung entstehen als Reaktionsprodukte der Kondensationsreaktion insbesondere auch Verbindungen der Formel HO-R⁴, wobei R⁴ bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel HO-R⁴ um eine Verbindung, welche sich leicht aus der vernetzenden oder der bereits vernetzten Zusammensetzung verflüchtigt.

Weiterhin betrifft die vorliegende Erfindung die Verwendung einer Silikonzusammensetzung, wie sie vorhergehend beschrieben worden ist, als Klebstoff, Dichtstoff, Beschichtung oder als Gussmasse.

Weiterhin betrifft die vorliegende Erfindung eine gehärtete Silikonzusammensetzung erhältlich aus einer vorhergehend beschriebenen zweikomponentigen Silikonzusammensetzung durch Mischen der Komponente **A** mit der Komponente **B.**

Eine erfindungsgemässe zweikomponentige Zusammensetzung kann als Klebstoff oder Dichtstoff in einem Verfahren zum Verkleben oder Verfugen von Substraten verwendet werden. Das erfindungsgemäße Verfahren umfasst
a) das Einmischen der Komponente **B** in die Komponente **A,** um eine Mischung zu erhalten,
b) die Applikation der Mischung auf ein Substrat und Inkontaktbringen der auf dem Substrat applizierten Mischung mit einem weiteren Substrat, um eine Klebverbindung zwischen den Substraten zu erhalten, oder
   das Einbringen der Mischung in eine Fuge zwischen zwei Substraten, um eine Verfugung zwischen den Substraten zu erhalten, und
c) das Härten der Mischung,
wobei das Einmischen gemäß Schritt a) vor oder während der Applikation oder Einbringung gemäß Schritt b) durchgeführt wird.

Die Komponenten der zweikomponentigen erfindungsgemässen Zusammensetzung werden zur Lagerung getrennt voneinander aufbewahrt. Die Vermischung der Komponenten **A** und **B** in Schritt a) kann auf übliche Weise erfolgen, z.B. durch Einrühren der Komponente **B** in die Komponente **A,** was manuell oder mithilfe einer geeigneten Rührvorrichtung, z.B. mit einem Statikmischer, Dynamikmischer, Speedmixer, Dissolver etc. erfolgen kann. Die beiden Komponenten können auch für die Applikation oder Einbringung aus den getrennten Aufbewahrungsbehältern, z.B. mit Zahnradpumpen, ausgepresst und vermischt werden. Die Vermischung kann dabei z.B. in Zufuhrleitungen oder Düsen für die Applikation oder Einbringung erfolgen oder unmittelbar auf dem Substrat oder in der Fuge erfolgen.

Das Einmischen gemäß Schritt a) kann somit vor oder während der Applikation oder Einbringung gemäß Schritt b) durchgeführt wird. Die Vermischung sollte relativ kurz vor der weiteren Verarbeitung erfolgen, da mit der Vermischung der Aushärteprozess beginnt.

Die Applikation auf ein Substrat oder das Einbringen in eine Fuge zwischen Substraten gemäß Schritt b) kann auf übliche Weise erfolgen, z.B. von Hand oder in einem automatisierten Prozess mithilfe von Robotern. Bei Verkleben wird das mit der Mischung versehene Substrat mit einem weiteren Substrat in Kontakt gebracht, gegebenenfalls unter Druck, um eine Klebverbindung zwischen den Substraten zu erhalten. Danach lässt man in Schritt c) die Mischung härten, gewöhnlich bei Raumtemperatur, um die Verklebung oder Verfugung der Substrate zu erreichen. Auf diese Weise werden die erfindungsgemäßen verklebten oder verfugten Substrate mit der gehärteten Mischung aus Komponente **A** und **B** als Kleb- oder Dichtmaterial erhalten.

Die zu verklebenden, beschichtenden oder verfugenden Substrate können aus dem gleichen oder aus einem verschiedenen Material sein. Es können alle üblichen Materialien mit der erfindungsgemäßen zweikomponentigen Zusammensetzung verklebt, abgedichtet, beschichtet oder verfugt werden. Bevorzugte Materialien zum Beschichten, Abdichten, Verkleben oder Verfugen sind Glas, Glaskeramik, Metalle, wie z.B. Aluminium, Kupfer, Stahl oder Edelstahl, Beton, Mörtel, Bausteine, wie z.B. Sandstein, Backstein, Ziegel, Keramik, Gips, Naturstein wie Granit oder Marmor und Kalksandstein, Asphalt, Bitumen, Kunststoffe, wie z.B. Polyolefine, PVC, Tedlar, PET, Polyamid, Polycarbonat, Polystyrol oder Poly(meth)acrylat, Polyester, Epoxydharz und Verbundwerkstoffe wie CFK, sowie bemalte oder lackierte Oberflächen.

Die erfindungsgemäßen ein- oder zweikomponentigen Silikonformulierungen, bevorzugt in Form eines RTV-Silikons, eignen sich insbesondere als elastische Kleb- oder Dichtstoffe, Beschichtungen oder Vergussmassen. Ein geeignetes Anwendungsgebiet ist z.B. das Kleben, Beschichten oder Dichten von Gegenständen aus Glas, Metall, z.B. Aluminium, Kupfer, oder Edelstahl, oder Kunststoff, z.B. PVC, Polyamid, Polycarbonat oder PET, sowie weiteren Materialien wie oben beschrieben. Die erfindungsgemäßen Silikonformulierungen werden besonders bevorzugt als Kleb- oder Dichtstoffe z.B. in den Bereichen Bau, beispielsweise Fenster- und Fassedanbau, Sanitär, Automobil, Solartechnik, Windkrafttechnik, weisse, braune oder rote Ware, Elektronik und Boots- und Schiffbau verwendet.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beispiel 1 - Herstellung eines Diquanidino-PDMS Katalysators

1,1'-(α,ω-n-Propyl-poly(dimethylsiloxan))-bis(2,3-dicylcohexylguanidin) In einem Rundkolben wurden 16.90 g α,ω-Bis(3-aminopropyl)-poly(dimethylsiloxan) mit einem mittleren Molekulargewicht von ca. 1050 g/mol (Wacker AMinol SLM 92503, Wacker; Aminzahl 109 mg KOH/g) und 6.18 g N,N'-Dicyclohexylcarbodiimid vermischt und die Mischung unter Rühren auf 120°C erwärmt. In regelmässigen Abständen wurde das Reaktionsgemisch mittels FT-IR-Spektroskopie untersucht. Nach 17 Stunden war die Carbodiimid Bande bei ca. 2120 cm⁻¹ vollständig verschwunden. Man erhielt ein farbloses, geruchloses Öl mit einer Viskosität bei 20°C von 436 cP.
FT-IR: 2961, 2930, 2855, 1647 (C=N), 1449, 1411, 1364, 1258, 1011, 862, 788, 700 cm⁻¹.

### Beispiel 2 - Herstellung des Zn-acetamid katalysators

Es wurden 316.4 g Ethyl-3-oxohexanoat und 310.18 g Dibutylamin in einen 1L Rundkolben eingewogen. Dieses Gemisch wurde anschliessend für 26 h bei 110 °C und 300 mbar an den Roationsverdampfer angehängt. Danach wurde das Vakuum auf das Minimum reduziert. Das Zwischenprodukt (=Ligand) wurde anschliessend mittels Vakuumdestillation gereinigt (120°C, 0.5 mbar). 11.10 g Zinkacetylacetonathydrat wurde im Hochvakuum bei 80°C über Nacht getrocknet, resultierend in 10.023 g Zinkacetylacetonat (weisses Pulver). 20.06 g Ligand (2.19 eq.) wurden zu dem Pulver gegeben und die Mischung wurde für 4h auf 100°C erwärmt. Im Anschluss wurde die Temperatur auf 60°C reduziert und über Nacht unter Hochvakuum gehalten. Es resultiert ein gelbliches Öl mit 11% Zink-Gehalt.

### Beispiel 3 beschreibt die Herstellung einer Polymerkomponenten A.

Die genaue Zusammensetzung der Polymerkomponente **A** (Beispiel 3), in Gew-%, bezogen auf die gesamte Komponente **A,** ist in Tabelle 1 dargestellt.

**Tabelle 1. Alle Angaben in %-Gew., bezogen auf die Polymerkomponente A.**

| | **Beispiel 3** (Polymerkomponente **A**) |
|---|---|
| Polymer FD 20 | 44.44 |
| Silikonöl AK 100 | 8.89 |
| Carbital 110 | 26.67 |
| Hakuenka CCR-S10 | 20.00 |

### Beispiel 3 - Herstellung der Polymer-Komponente A

In einem 5 I Planetenmischer (Hermann Linden Maschinenfabrik) wurden Dihydroxy-terminiertes PDMS mit einer Viskosität von 20'000 cP (1500 g, Polymer FD 20 - Wacker Chemie, Deutschland) mit einem Di-TMSterminiertem PDMS mit einer Viskosität von 100 cP (300 g) während 5 min (Dissolver Geschwindigkeit: 300 U/min, Kneter Geschwindigkeit: 70 U/min) gemischt. Bei reduzierter Mischgeschwindigkeit wurde gemahlenes Calciumkarbonat (900 g, Carbital 110, Imerys) zugegeben. Nach erfolgter Zugabe wurde die Mischgeschwindigkeit wiederhergestellt (Dissolver: 300 U/min, Kneter: 70 U/min) und für 5 min beibehalten. Die Mischgeschwindigkeit wurde erneut reduziert und es wurde gefälltes Calicumcarbonat (675 g, Hakuenka CCR-S10, Omya) zugegeben. Die Mischung wurde für 5 min bei 400 U/min (Dissolver) und 80 rpm (Kneter) unter Vakuum (100 mbar) homogenisiert. Die Polymer-Komponente wurde in Polypropylen-Kartuschen umgefüllt und bei 23°C gelagert.

Beispiele 4 bis 12 beschreiben die Herstellung verschiedener erfindungsgemässer und nicht erfindungsgemässer Härterkomponenten **B.** Die genaue Zusammensetzung dieser Härterkomponenten **B** (Beispiele 4 bis 12), in Gew.-%, bezogen auf die gesamte jeweilige Härter Komponente **B,** ist in Tabellen 2 und 3 dargestellt.

**Tabelle 2. Alle Angaben in %-Gew., bezogen auf die jeweilige Härterkomponente B.**

| | **Bsp. 4** | **Bsp. 5** | **Bsp. 6** | **Bsp. 7** |
|---|---|---|---|---|
| Silikonöl 20000 | 36.97 | 32.48 | 32.48 | 32.48 |
| Silicadispersion | 11.01 | 11.01 | 11.01 | 11.01 |
| Dynasylan A | 9.17 | 9.17 | 9.17 | 9.17 |
| Dynasylan 40 | 22.02 | 22.02 | 22.02 | 22.02 |
| Monarch 460 | 7.34 | 7.34 | 7.34 | 7.34 |
| Geniosil GF 80 | 6.61 | | 4.40 | 8.81 |
| Geniosil GF 94 | 6.61 | 13.21 | 8.81 | 4.40 |
| Dibutylzinn-diacetat | 0.28 | | | |
| Zn Kat (Bsp. 2) | | 0.55 | 0.55 | 0.55 |
| Guanidin Kat (Bsp. 1) | | 4.22 | 4.22 | 4.22 |

**Tabelle 3. Alle Angaben in %-Gew., bezogen auf die jeweilige Härterkomponente B.**

| | **Bsp. 8** | **Bsp. 9** | **Bsp. 10** | **Bsp. 11** | **Bsp. 12** |
|---|---|---|---|---|---|
| Silikonöl 20000 | 32.48 | 32.48 | 32.48 | 36.70 | 33.03 |
| Silicadispersion | 11.01 | 11.01 | 11.01 | 11.01 | 11.01 |
| Dynasylan A | 9.17 | 9.17 | 9.17 | 9.17 | 9.17 |
| Dynasylan 40 | 22.02 | 22.02 | 22.02 | 22.02 | 22.02 |
| Monarch 460 | 7.34 | 7.34 | 7.34 | 7.34 | 7.34 |
| Geniosil GF 80 | 10.57 | | 8.81 | 6.61 | 8.81 |
| Geniosil GF 94 | | 5.62 | 4.40 | 6.61 | 4.40 |
| Propylamin | 2.64 | | | | |
| Ultra LITE 513 | | 7.59 | | | |
| Zn Kat (Bsp. 2) | 0.55 | 0.55 | | 0.55 | |
| Tetrakisisopropoxytitan | | | 0.55 | | |
| Guanidin Kat (Bsp. 1) | 4.22 | 4.22 | 4.22 | | 4.22 |

### Beispiel 4 (Vergleichsbeispiel)

Mit einem Speed-mixer (DAC 600.1 VAC-P - Hauschild, 2000 U/min, 20 sec) wurde Silikonöl mit einer Viskosität von 20'000 cP (110 g) mit einer Silicadispersion (32.8 g, 40% Silica (150 m²/g) in Silikonöl) gemischt. Im Anschluss wurden TEOS (27.3 g, Dynasylan A, Evonik) und oligo-TEOS (65.5 g, Dynasylan 40, Evonik) zugegeben und erneut gemischt (2000 U/min, 20 sec). Im Anschluss wurde Russ (21.8 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (39.3 g, Geniosil GF 80:Geniosil GF 94 (1:1), Wacker) wurde gemischt (2000 U/min, 20 sec). Zum Abschluss wurde der Katalysator zugegeben (0.82 g, Dibutylzinndiacetat) und unter Vakuum gemischt (2000 U/min, 20 s, 200 mbar). Die fertige Härter-Komponente wurde in eine Polypropylen-Kartusche umgefüllt und bei 23°C gelagert.

### Beispiel 5 (Vergleichsbeispiel)

Mit einem Speed-mixer (DAC 600.1 VAC-P - Hauschild, 2000 U/min, 20 sec) wurden gemischt Silikonöl mit einer Viskosität von 20'000 cP (120 g) mit einer Silicadispersion (40.7 g). Im Anschluss wurden TEOS (33.9 g, Dynasylan A, Evonik) und oligo-TEOS (81.4 g, Dynasylan 40, Evonik) zugegeben und erneut gemischt (2000 U/min, 20 sec). Im Anschluss wurde Russ (27.1 g, Monarch 460, Cabot) zunächst von Hand grob eingearbeitet, anschliessend wurde erneut am Speed-mixer gemischt (2000 U/min, 20 sec). Nach Zugabe des Haftvermittlers (48.8 g, Geniosil GF 94, Wacker) wurde gemischt (2000 U/min, 20 sec). Zum Abschluss wurde der Metall-Katalysator (2.03 g, nach Beispiel 2) und der Guanidin-Katalysator (15.6 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 6 (Vergleichsbeispiel)

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.9 g). Im Anschluss wurden TEOS (28.3 g, Dynasylan A, Evonik) und oligo-TEOS (67.8 g, Dynasylan 40, Evonik) zugegeben und erneut gemischt (2000 U/min, 20 sec). Im Anschluss wurde Russ (22.6 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.7 g, Geniosil GF 80:Geniosil GF 94 (1:2), Wacker) wurde gemischt (2000 U/min, 20 sec). Zum Abschluss wurde der Metall-Katalysator (1.69 g, nach Beispiel 2) und der Guanidin-Katalysator (13.0 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 7

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.9 g). Im Anschluss wurden TEOS (28.3 g, Dynasylan A, Evonik) und oligo-TEOS (67.8 g, Dynasylan 40, Evonik) zugegeben und erneut gemischt (2000 U/min, 20 sec). Im Anschluss wurde Russ (22.6 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.7 g, Geniosil GF 80:Geniosil GF 94 (2:1), Wacker) wurde gemischt (2000 U/min, 20 sec). Zum Abschluss wurde der Metall-Katalysator (1.69 g, nach Beispiel 2) und der Guanidin-Katalysator (13.0 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 8

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.9 g). Im Anschluss wurden TEOS (28.3 g, Dynasylan A, Evonik) und oligo-TEOS (67.8 g, Dynasylan 40, Evonik) zugegeben und erneut gemischt (2000 U/min, 20 sec). Im Anschluss wurde Russ (22.6 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.7 g, Geniosil GF 80(Wacker):Propylamin (4:1)) wurde gemischt (2000 U/min, 20 sec). Zum Abschluss wurde der Metall-Katalysator (1.69 g, nach Beispiel 2) und der Guanidin-Katalysator (13.0 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 9

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.9 g). Im Anschluss wurden TEOS (28.3 g, Dynasylan A, Evonik) und oligo-TEOS (67.8 g, Dynasylan 40, Evonik) zugegeben und erneut gemischt (2000 U/min, 20 sec). Im Anschluss wurde Russ (22.6 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.7 g, Ultra LITE 513 (Cardolite):Geniosil GF 94 (Wacker) (4:3)) wurde gemischt (2000 U/min, 20 sec). Zum Abschluss wurde der Metall-Katalysator (1.69 g, nach Beispiel 2) und der Guanidin-Katalysator (13.0 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 10

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.9 g). Im Anschluss wurden TEOS (28.3 g, Dynasylan A, Evonik) und oligo-TEOS (67.8 g, Dynasylan 40, Evonik) zugegeben und erneut gemischt (2000 U/min, 20 sec). Im Anschluss wurde Russ (22.6 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.7 g, Geniosil GF 80:Geniosil GF 94 (2:1), Wacker) wurde gemischt (2000 U/min, 20 sec). Zum Abschluss wurde der Metall-Katalysator (1.69 g, Tetrakisisopropoxytitan) und der Guanidin-Katalysator (13.0 g, nach Beispiel 1) zugegeben. Gemischt wurde unter Vakuum (2000 U/min, 20 s, 200 mbar). Die fertige Härter-Komponente wurde in eine Polypropylen-Kartusche umgefüllt und bei 23°C gelagert.

### Beispiel 11

Mit einem Speed-mixer (DAC 600.1 VAC-P - Hauschild, 2000 U/min, 20 sec) wurden gemischt Silikonöl mit einer Viskosität von 20'000 cP (110 g) mit einer Silicadispersion (33.0 g). Im Anschluss wurden TEOS (27.5 g, Dynasylan A, Evonik) und oligo-TEOS (66.0 g, Dynasylan 40, Evonik) zugegeben und erneut gemischt (2000 U/min, 20 sec). Im Anschluss wurde Russ (22.0 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (39.6 g, Geniosil GF 80:Geniosil GF 94 (1:1), Wacker) wurde gemischt (2000 U/min, 20 sec). Zum Abschluss wurde der Katalysator zugegeben (1.65 g, nach Beispiel 2) und unter Vakuum gemischt (2000 U/min, 20 s, 200 mbar). Die fertige Härter-Komponente wurde in eine Polypropylen-Kartusche umgefüllt und bei 23°C gelagert.

### Beispiel 12

Mit einem Speed-mixer (DAC 600.1 VAC-P - Hauschild, 2000 U/min, 20 sec) wurden gemischt Silikonöl mit einer Viskosität von 20'000 cP (100 g) mit einer Silicadispersion (33.3 g). Im Anschluss wurden TEOS (27.8 g, Dynasylan A, Evonik) und oligo-TEOS (66.7 g, Dynasylan 40, Evonik) zugegeben und erneut gemischt (2000 U/min, 20 sec). Im Anschluss wurde Russ (22.2 g, Monarch 460, Cabot) zunächst von Hand grob eingearbeitet, anschliessend wurde erneut am Speed-mixer gemischt (2000 U/min, 20 sec). Der Haftvermittler wurde vor der Zugabe zur Härter Komponente während 30 min bei 60°C vorgemischt. Nach Zugabe des Haftvermittlers (40.0 g, Geniosil GF 80:Geniosil GF 94 (2:1), Wacker) wurde gemischt (2000 U/min, 20 sec). Zum Abschluss wurde der Katalysator zugegeben (12.8 g, nach Beispiel 1) und unter Vakuum gemischt (2000 U/min, 20 s, 200 mbar). Die fertige Härter-Komponente wurde in eine Polypropylen-Kartusche umgefüllt und bei 23°C gelagert.

Beispiele 13 bis 21 beschreiben fertige, erfindungsgemässe und nicht erfindungsgemässe zweikomponentige Zusammensetzungen umfassend eine Polymerkomponente **A** und eine Härterkomponente **B.**

### Beispiel 13 (Vergleichsbeispiel)

Härter-Komponente nach Beispiel 4 und Polymer-Komponente nach Beispiel 3 wurden im Volumenverhältnis 1:10 mit einem Speed-mixer (DAC 600.1 VAC-P, 1500 U/min, 60 sec) gemischt. Die erhaltene Mischung diente zur Herstellung von Probekörpern zur Bestimmung der Härte (nach ISO 868), sowie der Haftungseigenschaften (nach DIN 54457). Haftungstests wurden auf Floatglass (Rocholl) und PVC (Rocholl) durchgeführt. Glas Probekörper wurden lediglich gereinigt (Sika Cleaner P, Sika), PVC wurde zusätzlich aktiviert (Sika Aktivator 205, Sika). Die Haftung wurde bestimmt nach 7d Lagerung bei 23°C/50 % r.h. (relative Luftfeuchte) und nach 21 d Warmwasserlagerung (55°C).
Zusätzlich wurde die Aushärtegeschwindigkeit (Topfzeit) in demselben Volumenverhältnis bestimmt. Die Polymer- und die Härter-Komponente wurden in einem Speed-mixer (DAC 400, Hauschild, 1800 U/min, 60 s) gemischt. In regelmässigen Abständen wurde die Beschaffenheit der Mischung beurteilt. Wenn die Mischung nicht mehr als Paste klassifiziert werden konnte, galt die Topfzeit als erreicht.

### Beispiel 14 (Vergleichsbeispiel)

Analog zu Beispiel 13 wurde mit der Härter-Komponente nach Beispiel 5 und Polymer-Komponente nach Beispiel 3 verfahren.

### Beispiel 15 (Vergleichsbeispiel)

Analog zu Beispiel 13 wurde mit der Härter-Komponente nach Beispiel 6 und Polymer-Komponente nach Beispiel 3 verfahren.

### Beispiel 16

Analog zu Beispiel 13 wurde mit der Härter-Komponente nach Beispiel 7 und Polymer-Komponente nach Beispiel 3 verfahren.

### Beispiel 17

Analog zu Beispiel 13 wurde mit der Härter-Komponente nach Beispiel 8 und Polymer-Komponente nach Beispiel 3 verfahren.

### Beispiel 18

Analog zu Beispiel 13 wurde mit der Härter-Komponente nach Beispiel 9 und Polymer-Komponente nach Beispiel 3 verfahren.

### Beispiel 19

Analog zu Beispiel 13 wurde mit der Härter-Komponente nach Beispiel 10 und Polymer-Komponente nach Beispiel 3 verfahren.

### Beispiel 20

Analog zu Beispiel 13 wurde mit der Härter-Komponente nach Beispiel 11 und Polymer-Komponente nach Beispiel 3 verfahren.

Die Testresultate der Beispiele 13 bis 21 werden in Tabellen 4 und 5 gezeigt.

**Tabelle 4. Messergebnisse (Topfzeit, Shore A Härte sowie Haftung) der Beispiele 13-16.**

| | **Bsp. 13** | **Bsp. 14** | **Bsp. 15** | **Bsp. 16** |
|---|---|---|---|---|
| Topfzeit [min] | 8.25 | 8 | 12 | 16 |
| Shore A Härte (7d RT) | 35 | 34 | 38 | 34 |
| Haftung Glas (7d RT) [%-Kohäsives Versagen] | 100 | 100 | 100 | 100 |
| Haftung Glas (14 d 55°C H₂O) [%-Kohäsives Versagen] | 100 | 0 | 0 | 100 |

**Tabelle 5. Messergebnisse (Topfzeit, Shore A Härte sowie Haftung) der Beispiele 17 -21.**

| | **Bsp. 17** | **Bsp. 18** | **Bsp. 19** | **Bsp. 20** |
|---|---|---|---|---|
| Topfzeit [min] | 27 | 24 | 11 | 68 |
| Shore A Härte (7d RT) | 31 | 33 | 31 | 33 |
| Haftung Glas (7d RT) [%-Kohäsives Versagen] | 100 | 100 | 100 | 100 |
| Haftung Glas (14 d 55°C H₂O) [%-Kohäsives Versagen] | 100 | 100 | 80 | 75 |

## Patentansprüche

1. Vernetzbare Silikonzusammensetzung, umfassend
a. mindestens ein kondensationsvernetzbares Polydiorganosiloxan **P** mit Silanol-, Alkoxysilyl-, Carboxysilyl- , Ketoximinosilyl-, Amidosilyl-, und/oder Aminosilyl-Endgruppen;
b. mindestens einen Silan- oder Siloxan-Vernetzer **V** für das kondensationsvernetzbare Polydiorganosiloxan;
c. mindestens einen Vernetzungskatalysator **K1** der allgemeinen Formel (I), 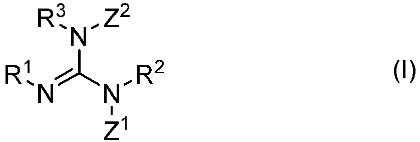 wobei Z¹ und Z² unabhängig voneinander H oder lineare oder verzweigte Oligodiorganylsiloxane der allgemeinen Formel (II) und (III) darstellen, und 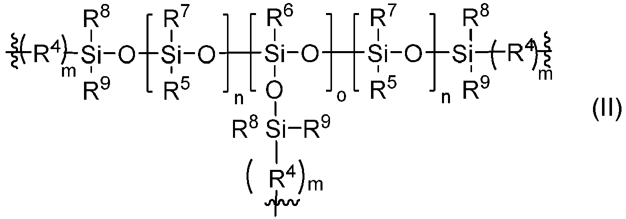 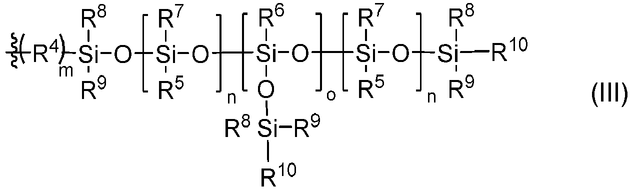
wobei Index n einen ganzzahligen Wert von 1 bis 400 darstellt; Index m einen ganzzahligen Wert von 1, 2 oder 3 darstellt; Index o einen ganzzahligen Wert von 0 bis 10 darstellt; und
die Reste R⁵ bis R¹⁰ unabhängig voneinander einen einwertigen, aliphatischen, linearen oder verzweigten C1 bis C8 Alkylrest darstellen, der optional Ringstrukturen und/oder Heteroatome ausgewählt aus der Gruppe Halogene, N, O, P oder S, enthält;
der Rest R⁴ einen zweiwertigen, aliphatischen, linearen oder verzweigten C1 bis C8 Alkylrest darstellt, der optional Ringstrukturen und/oder Heteroatome ausgewählt aus der Gruppe Halogene, N, O, P oder S, enthält; und
die Reste R¹ bis R³ unabhängig voneinander ein Wasserstoffatom oder einen aliphatischen, linearen oder verzweigten C1 bis C8 Alkylrest darstellen, der optional Ringstrukturen und/oder Heteroatome ausgewählt aus der Gruppe Halogene, N, O, P oder S, enthält, wobei die Reste R¹ bis R³ zu einem oder zwei aliphatischen oder aromatischen Ringen geschlossen vorliegen können und das Guanidin der Formel (I) gegebenenfalls protoniert vorliegen kann;
mit der Massgabe, dass mindestens ein Z₁ oder Z₂ einem linearen oder verzweigten Oligodiorganylsiloxan der Formel (II) oder Formel (III) entspricht;
d. mindestens einen Haftvermittler H der allgemeinen Formel (IV), 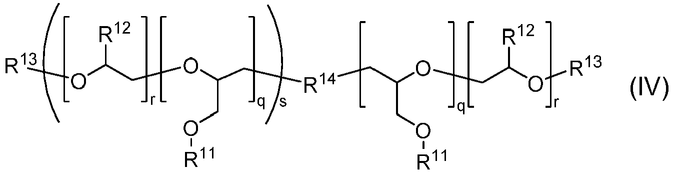
wobei Indizes q, r und s unabhängig voneinander einen ganzzahligen Wert zwischen 0 und 10 darstellen, mit der Massgabe, dass die Summe q + r ≥ 1 ist;
die Reste R¹¹ unabhängig voneinander für einen einwertigen, linearen oder verzweigten C1-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
die Reste R¹² unabhängig voneinander für einen einwertigen, linearen oder verzweigten C3-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
die Reste R¹³ unabhängig voneinander für ein Wasserstoffatom oder einen Rest R¹¹ stehen;
die Reste R¹⁴ unabhängig voneinander für einen zweiwertigen, linearen oder verzweigten C1-C21 Alkylrest stehen, welcher substituiert sein kann durch ein oder mehrere Heteroatome ausgewählt aus der Gruppe B, N, O, Si, S und P und/oder aliphatische oder aromatische Zyklen enthalten kann und/oder Doppelbindungen enthalten kann;
wobei der Haftvermittler H aus mindestens einem Epoxid und mindestens einem Amin hergestellt ist, die in einem Molverhältnis von Epoxidgruppen zu Amingruppen von 1:1 bis 2:1 eingesetzt wurden.

2. Silikonzusammensetzung gemäss Anspruch 1, **dadurch gekennzeichnet, dass** das Polydiorganosiloxan **P** Silanol-, Methoxysilan-, Ethoxysilan-, oder Acetoxysilanendgruppen aufweist.

3. Silikonzusammensetzung gemäss Anspruch 1 oder 2, **dadurch gekennzeichnet, dass** die Zusammensetzung frei ist von zinnorganischen Verbindungen.

4. Silikonzusammensetzung gemäss einem der Ansprüche 1 bis 3, **dadurch gekennzeichnet, dass** die Zusammensetzung zusätzlich einen Metallkatalysator **K2** enthält, der Katalysator **K2** umfassend ein Element ausgewählt aus den Gruppen 4, 8, 12, 13 und 15 des Periodensystems der Elemente, bevorzugt Bi, Zn, Zr oder Ti.

5. Silikonzusammensetzung gemäss einem der Ansprüche 1 bis 4, **dadurch gekennzeichnet, dass** der Silan- oder Siloxan-Vernetzer **V** für das kondensationsvernetzbare Polydiorganosiloxan mindestens ein tri- oder tetrafunktionelles Silan oder dessen Hydrolysate, Teilhydrolysate und/oder Kondensate umfasst.

6. Silikonzusammensetzung gemäss einem der vorhergehenden Ansprüche, **dadurch gekennzeichnet, dass** der Haftvermittler **H** mindestens eine Alkoxysilangruppe enthält.

7. Silikonzusammensetzung gemäss einem der vorhergehenden Ansprüche, **dadurch gekennzeichnet, dass** der Haftvermittler **H** aus mindestens einem Epoxysilan und mindestens einem Amin oder mindestens einem Aminosilan und mindestens einem Epoxid hergestellt ist.

8. Silikonzusammensetzung gemäss einem der vorhergehenden Ansprüche, **dadurch gekennzeichnet, dass** der Haftvermittler **H** aus mindestens einem Epoxysilan und mindestens einem Aminosilan hergestellt ist.

9. Silikonzusammensetzung gemäss einem der Ansprüche 1 bis 8, **dadurch gekennzeichnet, dass** der Haftvermittler **H** in der Zusammensetzung enthalten ist mit einer Menge von zwischen 0.5 und 2.5 Gew.-%, bezogen auf die gesamte Zusammensetzung.

10. Silikonzusammensetzung gemäss einem der Ansprüche 1 bis 9, **dadurch gekennzeichnet, dass** die Zusammensetzung eine zweikomponentige Silikonzusammensetzung ist bestehend aus einer Polymerkomponente **A** umfassend
- das mindestens eine reaktive Polydiorganosiloxanpolymere **P,**
- bevorzugt einen optional hydrophobierten Füllstoff **F,**
- bevorzugt mindestens einen Weichmacher;
und einer Härterkomponente **B** umfassend
- den mindestens einen Vernetzer **V** für Polydiorganosiloxane,
- den Katalysator **K1,**
- den Haftvermittler **H,**
- bevorzugt einen optional hydrophobierten Füllstoff F,
- bevorzugt mindestens einen Weichmacher.

11. Silikonzusammensetzung gemäss Anspruch 10, **dadurch gekennzeichnet, dass** das Gewichtsverhältnis von Komponente **A** zu Komponente **B** ≥ 1:1, insbesondere von 3:1 bis 15:1, bevorzugt von 7:1 bis 13:1, beträgt.

12. Verwendung eines Katalysators **K1** nach Formel (I) in Anspruch 1 in Kombination mit einem Haftvermittler **H** nach Formel (IV) in Anspruch 1 zur Verbesserung der Adhäsion einer zweikomponentigen Silikonzusammensetzung.

13. Verwendung gemäss Anspruch 12, **dadurch gekennzeichnet, dass** die zweikomponentige Zusammensetzung frei ist von zinnorganischen Verbindungen.

14. Verwendung einer Silikonzusammensetzung gemäss einem der Ansprüche 1 bis 11 als Klebstoff, Dichtstoff, Beschichtung oder Gussmasse.

15. Bauwerk oder Fabrikationsartikel, der mit einer Silikonzusammensetzung gemäss einem der Ansprüche 1 bis 11 verklebt, abgedichtet, ausgegossen oder beschichtet wurde.

## Claims

1. Crosslinkable silicone composition comprising
a. at least one condensation-crosslinkable polydiorganosiloxane **P** having silanol, alkoxysilyl, carboxysilyl, ketoximinosilyl, amidosilyl and/or aminosilyl end groups;
b. at least one silane or siloxane crosslinker **V** for the condensation-crosslinkable polydiorganosiloxane;
c. at least one crosslinking catalyst **K1** of the general formula (I) 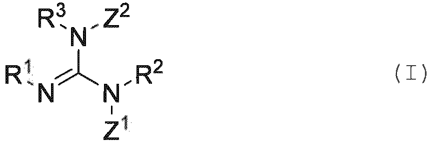 where Z¹ and Z² independently represent H or linear or branched oligodiorganylsiloxanes of the general formulae (II) and (III), and 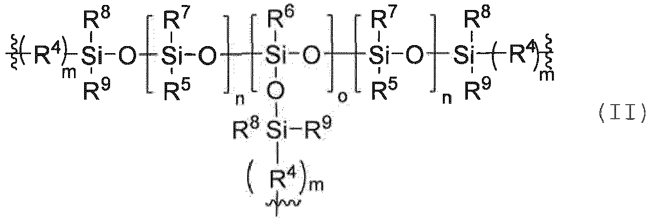 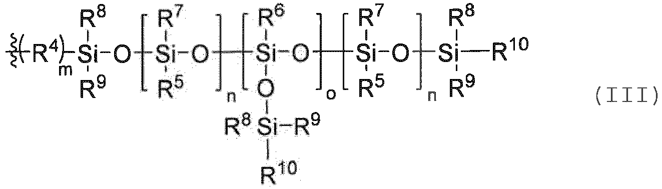
where index n represents an integer value from 1 to 400; index m represents an integer value of 1, 2 or 3; index o represents an integer value from 0 to 10; and
the R⁵ to R¹⁰ radicals independently represent a monovalent aliphatic linear or branched C1 to C8 alkyl radical which optionally contains ring structures and/or heteroatoms selected from the group of halogens, N, O, P and S;
the R⁴ radical represents a divalent aliphatic linear or branched C1 to C8 alkyl radical which optionally contains ring structures and/or heteroatoms selected from the group of halogens, N, O, P and S; and
the R¹ to R³ radicals independently represent a hydrogen atom or an aliphatic linear or branched C1 to C8 alkyl radical which optionally contains ring structures and/or heteroatoms selected from the group of halogens, N, O, P and S, where the R¹ to R³ radicals may be joined to form one or two aliphatic or aromatic rings and the guanidine of the formula (I) may optionally be in protonated form;
with the proviso that at least one Z¹ or Z² is a linear or branched oligodiorganylsiloxane of the formula (II) or formula (III);
d. at least one adhesion promoter **H** of the general formula (IV) 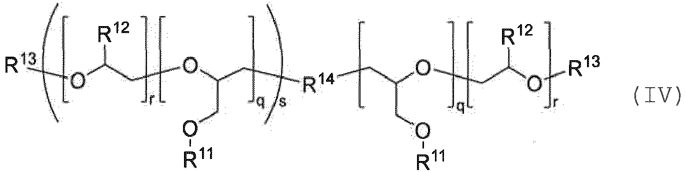
where indices q, r and s independently represents an integer value from 0 to 10, with the proviso that the sum total of q + r ≥ 1;
the R¹¹ radicals are independently a monovalent linear or branched C1-C21 alkyl radical which may be substituted by one or more heteroatoms selected from the group of B, N, O, Si, S and P and/or may contain aliphatic or aromatic cycles and/or may contain double bonds;
the R¹² radicals are independently a monovalent linear or branched C3-C21 alkyl radical which may be substituted by one or more heteroatoms selected from the group of B, N, O, Si, S and P and/or may contain aliphatic or aromatic cycles and/or may contain double bonds;
the R¹³ radicals are independently a hydrogen atom or an R¹¹ radical;
the R¹⁴ radicals are independently a divalent linear or branched C1-C21 alkyl radical which may be substituted by one or more heteroatoms selected from the group of B, N, O, Si, S and P and/or may contain aliphatic or aromatic cycles and/or may contain double bonds;
wherein the adhesion promoter **H** has been prepared from at least one epoxide and at least one amine that have been used in a molar ratio of epoxy groups to amine groups of 1:1 to 2:1.

2. Silicone composition according to Claim 1, **characterized in that** the polydiorganosiloxane **P** has silanol, methoxysilane, ethoxysilane or acetoxysilane end groups.

3. Silicone composition according to Claim 1 or 2, **characterized in that** the composition is free of organotin compounds.

4. Silicone composition according to any of Claims 1 to 3, **characterized in that** the composition additionally comprises a metal catalyst **K2,** the catalyst **K2** comprising an element selected from groups 4, 8, 12, 13 and 15 of the Periodic Table of the Elements, preferably Bi, Zn, Zr or Ti.

5. Silicone composition according to any of Claims 1 to 4, **characterized in that** the silane or siloxane crosslinker **V** for the condensation-crosslinkable polydiorganosiloxane comprises at least one tri- or tetrafunctional silane or hydrolyzates, partial hydrolyzates and/or condensates thereof.

6. Silicone composition according to any of the preceding claims, **characterized in that** the adhesion promoter **H** contains at least one alkoxysilane group.

7. Silicone composition according to any of the preceding claims, **characterized in that** the adhesion promoter **H** has been prepared from at least one epoxysilane and at least one amine or at least one aminosilane and at least one epoxide.

8. Silicone composition according to any of the preceding claims, **characterized in that** the adhesion promoter **H** has been prepared from at least one epoxysilane and at least one aminosilane.

9. Silicone composition according to any of Claims 1 to 8, **characterized in that** the adhesion promoter **H** is present in the composition in an amount of between 0.5% and 2.5% by weight, based on the overall composition.

10. Silicone composition according to any of Claims 1 to 9, **characterized in that** the composition is a two-component silicone composition consisting of a polymer component **A** comprising
- the at least one reactive polydiorganosiloxane polymer **P,**
- preferably an optionally hydrophobized filler **F,**
- preferably at least one plasticizer;
and a hardener component **B** comprising
- the at least one crosslinker **V** for polydiorganosiloxanes,
- the catalyst **K1,**
- the adhesion promoter **H,**
- preferably an optionally hydrophobized filler **F,**
- preferably at least one plasticizer.

11. Silicone composition according to Claim 10, **characterized in that** the weight ratio of component **A** to component **B** is ≥ 1:1, especially from 3:1 to 15:1, preferably from 7:1 to 13:1.

12. Use of a catalyst **K1** of formula (I) in Claim 1 in combination with an adhesion promoter **H** of formula (IV) in Claim 1 for improving the adhesion of a two-component silicone composition.

13. Use according to Claim 12, **characterized in that** the two-component composition is free of organotin compounds.

14. Use of a silicone composition according to any of Claims 1 to 11 as adhesive, sealant, coating or casting compound.

15. Built construction or fabricated article that has been bonded, sealed, cast or coated with a silicone composition according to any of Claims 1 to 11.

## Revendications

1. Composition de silicone, réticulable, comprenant
a. au moins un polydiorganosiloxane P réticulable par condensation doté de groupes terminaux silanol, alcoxysilyle, carboxysilyle, cétoximinosilyle, amidosilyle et/ou aminosilyle ;
b. au moins un agent de réticulation V de silane ou de siloxane pour le polydiorganosiloxane réticulable par condensation ;
c. au moins un catalyseur de réticulation K1 de formule générale (I), 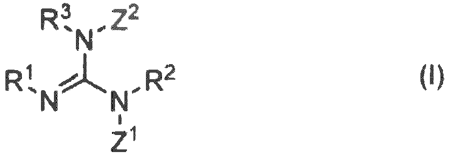 Z¹ et Z² représentant indépendamment l'un de l'autre H ou des oligodiorganylsiloxanes de formule générale (II) et (III), et 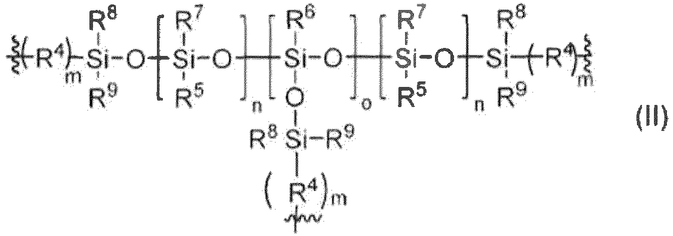 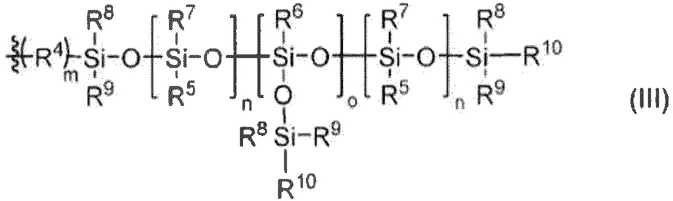
l'indice n représentant un nombre entier de 1 à 400 ; l'indice m représentant un nombre entier de 1, 2 ou 3 ; l'indice o représentant un nombre entier de 0 à 10 ; et les radicaux R⁵ à R¹⁰ représentant indépendamment les uns des autres un radical monovalent, aliphatique C₁₋₈-alkyle linéaire ou ramifié, qui contient éventuellement des structures cycliques et/ou des hétéroatomes choisis dans le groupe des halogènes, N, O, P et S ;
le radical R⁴ représentant un radical divalent, aliphatique C₁₋₈-alkyle linéaire ou ramifié, qui contient éventuellement des structures cycliques et/ou des hétéroatomes choisis dans le groupe des halogènes, N, O, P et S ; et
les radicaux R¹ à R³ représentant indépendamment les uns des autres un atome d'hydrogène ou un radical aliphatique C₁₋₈-alkyle linéaire ou ramifié, qui contient éventuellement des structures cycliques et/ou des hétéroatomes choisis dans le groupe des halogènes, N, O, P et S, les radicaux R¹ à R³ pouvant être présents sous forme refermée pour donner un ou deux cycles aliphatiques et/ou aromatiques et la guanidine de formule (I) pouvant éventuellement être présente sous forme protonée ; étant entendu qu'au moins un Z₁ ou un Z₂ correspond à un oligodiorganylsiloxane de formule (II) ou de formule (III) ;
d. au moins un promoteur d'adhérence H de formule générale (IV), 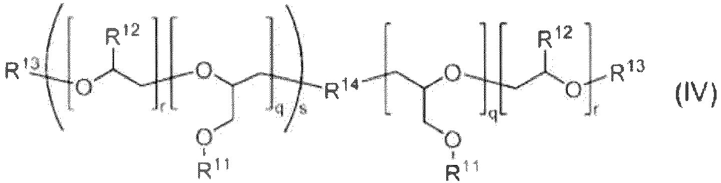
les indices q, r et s représentant indépendamment les uns des autres une valeur de nombre entier entre 0 et 10, étant entendu que la somme q + r est ≥ 1 ;
les radicaux R¹¹ représentant indépendamment les uns des autres un radical monovalent C₁₋₂₁-alkyle linéaire ou ramifié, qui peut être substitué par un ou plusieurs hétéroatomes choisis dans le groupe B, N, O, Si, S et P et/ou qui peut contenir des cycles aliphatiques ou aromatiques et/ou qui peut contenir des doubles liaisons ;
les radicaux R¹² représentant indépendamment les uns des autres un radical monovalent C₃₋₂₁-alkyle linéaire ou ramifié, qui peut être substitué par un ou plusieurs hétéroatomes choisis dans le groupe B, N, O, Si, S et P et/ou qui peut contenir des cycles aliphatiques ou aromatiques et/ou qui peut contenir des doubles liaisons ;
les radicaux R¹³ représentant indépendamment les uns des autres un atome d'hydrogène ou un radical R¹¹ ;
les radicaux R¹⁴ représentant indépendamment les uns des autres un radical divalent C₁₋₂₁-alkyle linéaire ou ramifié, qui peut être substitué par un ou plusieurs hétéroatomes choisis dans le groupe B, N, O, Si, S et P et/ou qui peut contenir des cycles aliphatiques ou aromatiques et/ou qui peut contenir des doubles liaisons ;
le promoteur d'adhérence H étant préparé à partir d'au moins un époxyde et d'au moins une amine, qui ont été utilisés en un rapport molaire des groupes époxyde sur les groupes amine de 1 : 1 à 2 : 1.

2. Composition de silicone selon la revendication 1, **caractérisée en ce que** le polydiorganosiloxane P présente des groupes terminaux silanol, méthoxysilane, éthoxysilane ou acétoxysilane.

3. Composition de silicone selon la revendication 1 ou 2, **caractérisée en ce que** la composition est exempte de composés d'organoétain.

4. Composition de silicone selon l'une quelconque des revendications 1 à 3, **caractérisée en ce que** la composition contient de plus un catalyseur métallique K2, le catalyseur K2 comprenant un élément choisi parmi les groupes 4, 8, 12, 13 et 15 du système périodique des éléments, préférablement Bi, Zn, Zr ou Ti.

5. Composition de silicone selon l'une quelconque des revendications 1 à 4, **caractérisée en ce que** l'agent de réticulation V de silane ou de siloxane pour le polydiorganosiloxane réticulable par condensation comprend au moins un silane trifonctionnel ou tétrafonctionnel ou ses hydrolysats, ses hydrolysats partiels et/ou ses condensats.

6. Composition de silicone selon l'une quelconque des revendications précédentes, **caractérisée en ce que** le promoteur d'adhérence H contient au moins un groupe alcoxysilane.

7. Composition de silicone selon l'une quelconque des revendications précédentes, **caractérisée en ce que** le promoteur d'adhérence H est préparé à partir d'au moins un époxysilane et d'au moins une amine ou d'au moins un aminosilane et d'au moins un époxyde.

8. Composition de silicone selon l'une quelconque des revendications précédentes, **caractérisée en ce que** le promoteur d'adhérence H est préparé à partir d'au moins un époxysilane et d'au moins un aminosilane.

9. Composition de silicone selon l'une quelconque des revendications 1 à 8, **caractérisée en ce que** le promoteur d'adhérence H est contenu dans la composition en une quantité comprise entre 0,5 et 2,5 % en poids, par rapport à la composition totale.

10. Composition de silicone selon l'une quelconque des revendications 1 à 9, **caractérisée en ce que** la composition est une composition de silicone à deux composants constituée d'un composant de polymère A comprenant
- l'au moins un polymère P de type polydiorganosiloxane réactif,
- préférablement une charge F éventuellement hydrophobisée,
- préférablement au moins un plastifiant ;
et d'un composant de durcisseur B comprenant
- l'au moins un agent de réticulation V pour des polydiorganosiloxanes,
- le catalyseur K1,
- le promoteur d'adhérence H,
- préférablement une charge F éventuellement hydrophobisée,
- préférablement au moins un plastifiant.

11. Composition de silicone selon la revendication 10, **caractérisée en ce que** le rapport pondéral du composant A sur le composant B est ≥ 1:1, en particulier de 3:1 à 15:1, préférablement de 7:1 à 13:1.

12. Utilisation d'un catalyseur K1 selon la formule (I) dans la revendication 1 en combinaison avec un promoteur d'adhérence H selon la formule (IV) dans la revendication 1 pour l'amélioration de l'adhérence d'une composition de silicone à deux composants.

13. Utilisation selon la revendication 12, **caractérisée en ce que** la composition à deux composants est exempte de composés d'organoétain.

14. Utilisation d'une composition de silicone selon l'une quelconque des revendications 1 à 11 en tant qu'agent adhésif, agent d'étanchéité, revêtement ou masse coulée.

15. Bâtiment ou article de fabrication qui a été collé, étanchéifié, surmoulé ou revêtu avec une composition de silicone selon l'une quelconque des revendications 1 à 11.
